# EUROPEAN PATENT SPECIFICATION

(11) **EP 1 252 921 B1**
(45) Date of publication and mention of the grant of the patent: **03.11.2004**
(21) Application number: 02013232.0
(22) Date of filing: 08.08.1996
(51) Int. Cl.: B01D 63/02, B01D 63/04, B01D 65/02

(54) **Apparatus for withdrawing permeate from a multicomponent liquid substrate**
Vorrichtung zur Permeatentnahme aus einem flüssigen Substrat mit mehreren Bestandteilen
Dispositif d'extraction d'un perméat liquide à composants multiples

(30) Priority: 11.08.1995 US 514119; 31.07.1996 US 690045
(43) Date of publication of application: 30.10.2002
(62) Divisional of application: 01120849.3
(73) Proprietor: Zenon Environmental Inc., Oakville, Ontario L6M 4B2 (CA)
(72) Inventor: Mahendran, Mailvaganam, Hamilton, Ontario 19C 3T9 (CA); Pedersen, Steven Kristian, Burlington, Ontario L7N 3E2 (CA); Henshaw, Wayne Jerald, Burlington, Ontario L7L 3J5 (CA); Behmann, Henry, Puslinch, Ontario M3H 1M9 (CA)
(74) Representative: Cronin, Brian Harold John

(56) References cited:
- WO-A-94/11094

## Description

This invention relates to a membrane device which is an improvement on a frameless array of hollow fiber membranes the subject of WO-A-9411094 and U.S. Patent No. 5,248,424, hereinafter referred to as the '424 patent.

The '424 patent discloses a membrane device for withdrawing permeate from a multicomponent liquid substrate that has a frameless array of fiber membranes operating unsupported, except for the substrate and not confined in a shell or a module. A pair of spaced-apart headers in the substrate enable the deployed fibers to present an arcuate configuration above a horizontal plane through their centre lines, the opposed terminal ends of the fibers being secured in first and second headers respectively so as to have open ends extending from their faces for discharging the permeate, the open ends being in fluid-tight relationship with each other in each header. Liquid collection means for the permeate are connected to the lower faces of the headers in open fluid communication and means are provided for withdrawing the permeate. The surfaces of the fibers are kept awash in bubbles of fiber-cleansing gas by a gas distribution system having outlets for discharging bubbles, the outlets disposed in a row parallel to a long dimension of rectangular headers.

The '424 patent describes an apparatus for withdrawing filtered permeate from a substrate, comprising a header having a first face and a second face; a receptacle for collecting permeate, the receptacle being in fluid communication with the second face of the header and having a permeate outlet; and a plurality of hollow fibre membranes, the hollow fibre membranes being sealingly secured in the header and protruding from the first face of the header, and having ends open to the receptacle for collecting permeate such that a portion of the substrate drawn into the lumens of the fibres as permeate may flow into the receptacle. A pipe or pipes having holes for discharging bubbles, is arranged for aerating the membranes. In some embodiments, these pipes are placed between headers that hold the membranes in an arched configuration, and lie under the arched membranes. In a particular embodiment the gas is supplied through horizontal gas lines disposed horizontally over the headers such that the gas lines divide the membranes into two separate rows.

The term "vertical skein" (hereafter "skein" for brevity), specifically refers to an integrated combination of structural elements including (i) a multiplicity of vertical fibers of substantially equal length; (ii) a pair of headers in each of which are potted the opposed terminal portions of the fibers so as to leave their ends open; and, (iii) permeate collection means held peripherally in fluid-tight engagement with each header so as to collect permeate from the ends of the fibers. Terms used in '424 patent are summarized in a glossary herein.

This invention is particularly directed to relatively large systems for the microfiltration of liquids, and capitalizes on the simplicity and effectiveness of a configuration which dispenses with forming a module in which the fibers are confined in the '424 patent, the novel configuration efficiently uses air discharged near the base of a skein to produce bubbles in a specified size range, and in an amount large enough to scrub the fibers, and to provide controlled scrubbing of fibers one against another ("inter-fiber scrubbing"). Unlike in the '424 system, the fibers in a skein are vertical and do not present an arcuate configuration above a horizontal plane through the horizontal center-line of a header. As a result, the path of the rising bubbles is generally parallel to the fibers and is not crossed by the fibers of a vertical skein. Yet the bubbles scrub the fibers.

The restrictedly swayable fibers, because of their defined length, do not get entangled, and do not abrade each other excessively, as is likely in the '424 array. The side-to-side displacement of an intermediate portion of each fiber within the "zone of confinement" or "bubble zone" is restricted by the fiber's length. The defined length of the fibers herein minimizes (i) shearing forces where the upper fibers are held in the upper header, (ii) excessive rotation of the upper portion of the fibers, as well as (iii) excessive abrasion between fibers. Such swaying motion of a fiber with side-to-side displacement is distinct from vibration which occurs when a fiber is taut, that is, when the length of the potted fiber exposed to substrate is not longer than the distance between the opposed faces of upper and lower headers holding the fiber. Such vibration is induced by bubbles in a process for exfoliating and precipitating dense particles in U.S. Patent No. 5,209,852 to Sunaoka et al. Unlike the fibers held in the module used in the '852 process, in our novel skein, there is essentially no tension on each fiber because the opposed faces of the headers are spaced apart at a distance less than the length of an individual fiber.

The use of an array of fibers in the direct treatment of activated sludge in a bioreactor, is described in an article titled "Direct Solid-Liquid Separation Using Hollow Fiber Membrane in an Activated Sludge Aeration Tank" by Kazuo Yamamoto et al in ***Wat. Sci. Tech.*** Vol. 21, Brighton pp 43-54, 1989, and discussed in the '424 patent, the disclosure of which is incorporated by reference thereto as if fully set forth herein. The relatively poor performance obtained by Yamamoto et al was mainly due to the fact that they did not realize the critical importance of maintaining flux by aerating a skein of fibers from within and beneath the skein. They did not realize the necessity of thoroughly scrubbing substantially the entire surfaces of the fibers by flowing bubbles through the skein to keep the fibers awash in bubbles. This requirement becomes more pronounced as the number of fibers in the skein increases.

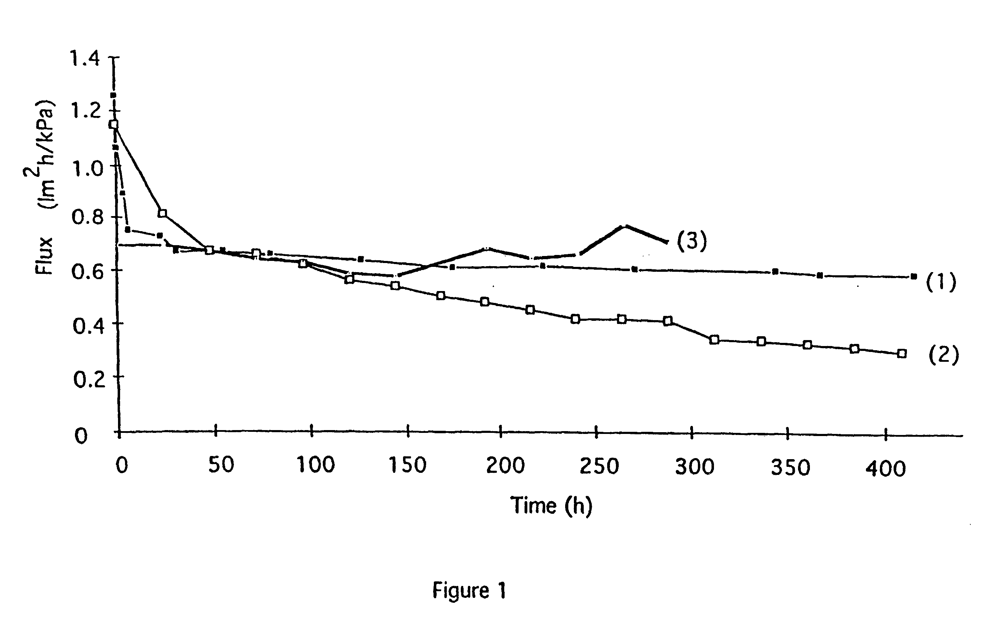

Tests using the device of Yamamoto et al indicate that when the air is provided outside the skein the flux decreases much faster over a period of as little as 50 hr, confirming the results obtained by them. This is evident in Fig 1 described in greater detail below, in which the graphs show results obtained by Yamamoto et al, and the '424 array, as well as-those with a vertical skein in which the headers are rectangular, all three assemblies using essentially ident fibers, under essentially identical conditions.

The investigation of Yamamoto et al with downwardly suspended fibers was continued and recent developments were reported in an article titled "Organic Stabilization and Nitrogen Removal in Membrane Separation Bioreactor for Domestic Wastewater Treatment" by C. Chiemchaisri et al delivered in a talk to the Conference on Membrane Technology in Wastewater Management, in Cape Town, South Africa, March 2-5, 1992, also discussed in the '424 patent. The fibers were suspended downwardly and highly turbulent flow of water in alternate directions, was essential.

It is evident that the disclosure in either the Yamamoto et al or the Chiemchaisri et al reference indicated that the flow of air across the surfaces of the suspended fibers did little or nothing to inhibit the attachment of microorganisms from the substrate.

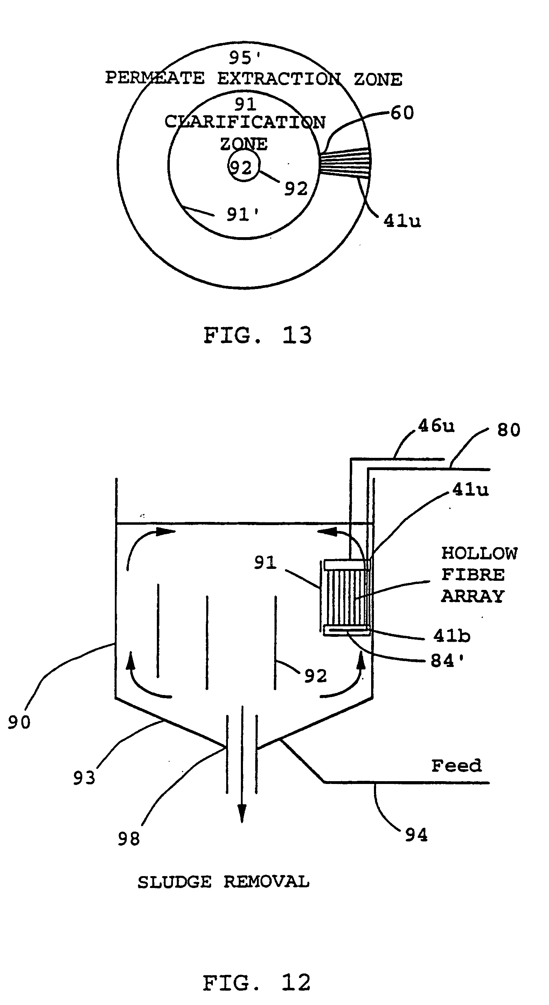

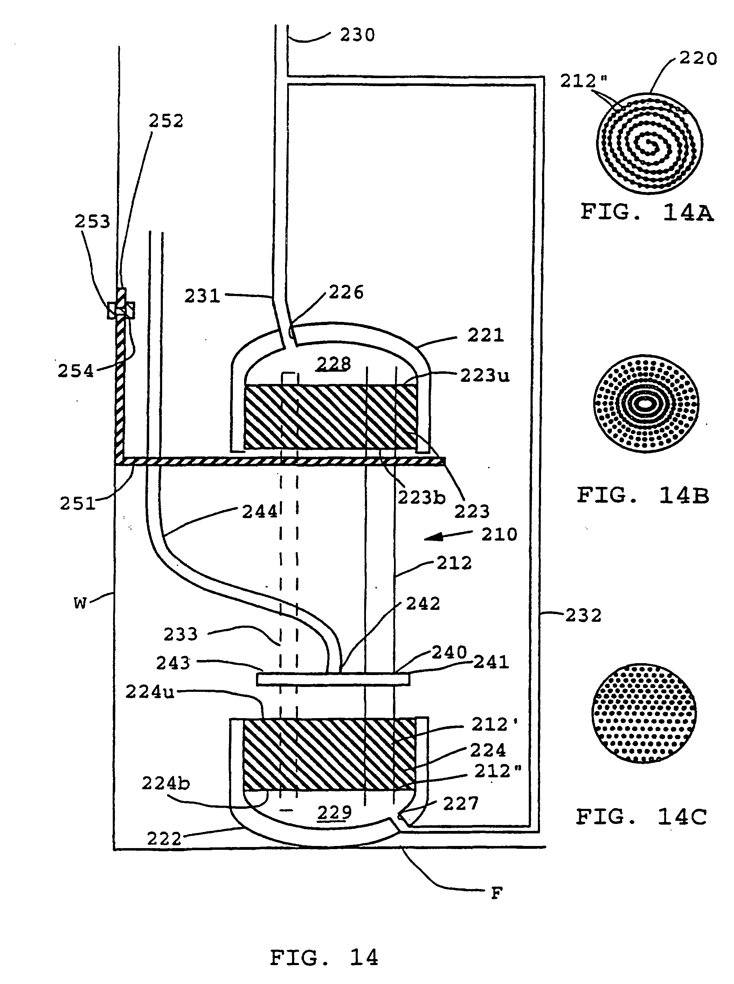

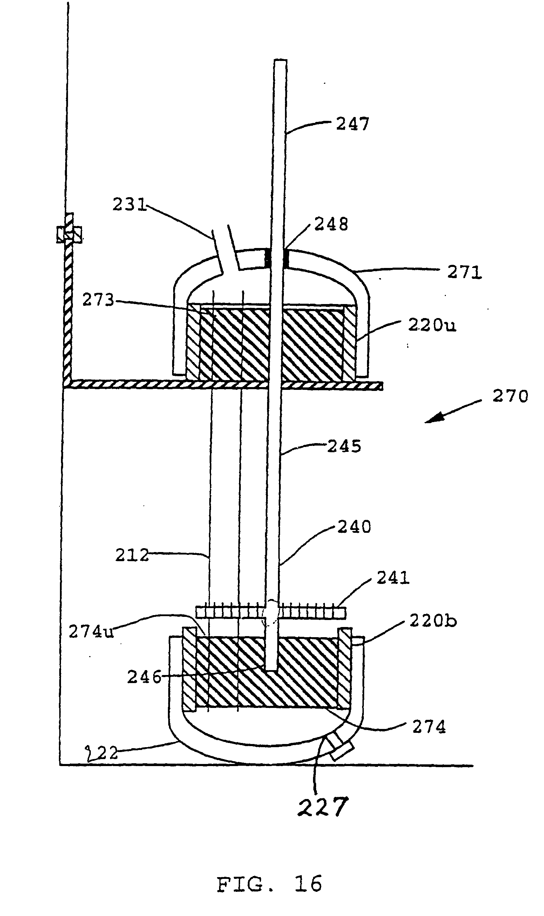

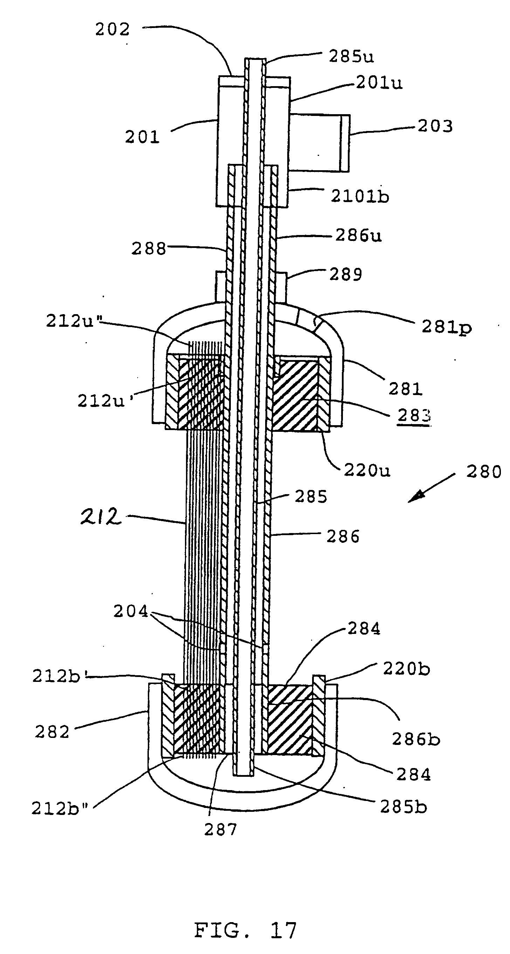

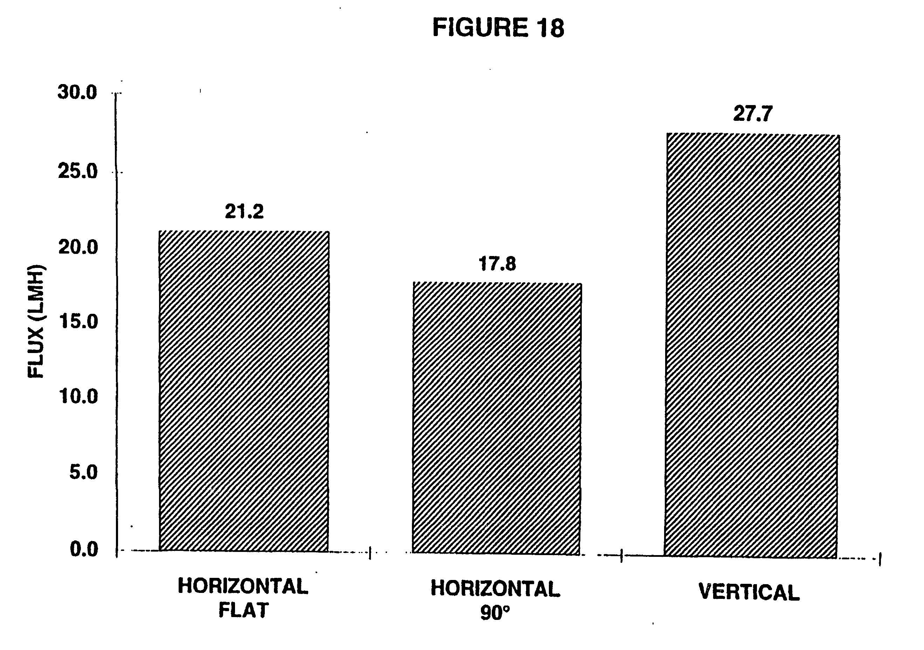

Later, in European patent application 0 598 909 A1 filed by Yamamori et al, they sought to avoid the problem of build-up on the fibers by "spreading the hollow fibers in the form of a flat sheet" (see page 4, lines 46-47) and there is no indication how the fibers would be maintained in a spread position in actual use. Further, each array is held in a "structural member for enclosing and supporting the fastening member" (see page 3, line 42, and lines 51-52) which is contrary to the concept of a frameless array. Figs 14, and 18 emphasize the horizontal configuration in which the array is used. To combat build-up Fig 13 depicts how the fibers would trough when the array is taken out of the reservoir to be "vibrated" or shaken. A prior art module is illustrated in Fig 16 showing both ends of each fiber potted in a cylindrical header, each fiber forming a loop, the looped ends being free. As the data in Fig 17 shows, use of the prior art cylindrical module with looped ends freely movable in the substrate, was less effective than the frameless array with spread apart looped fibers shown in Fig 1.

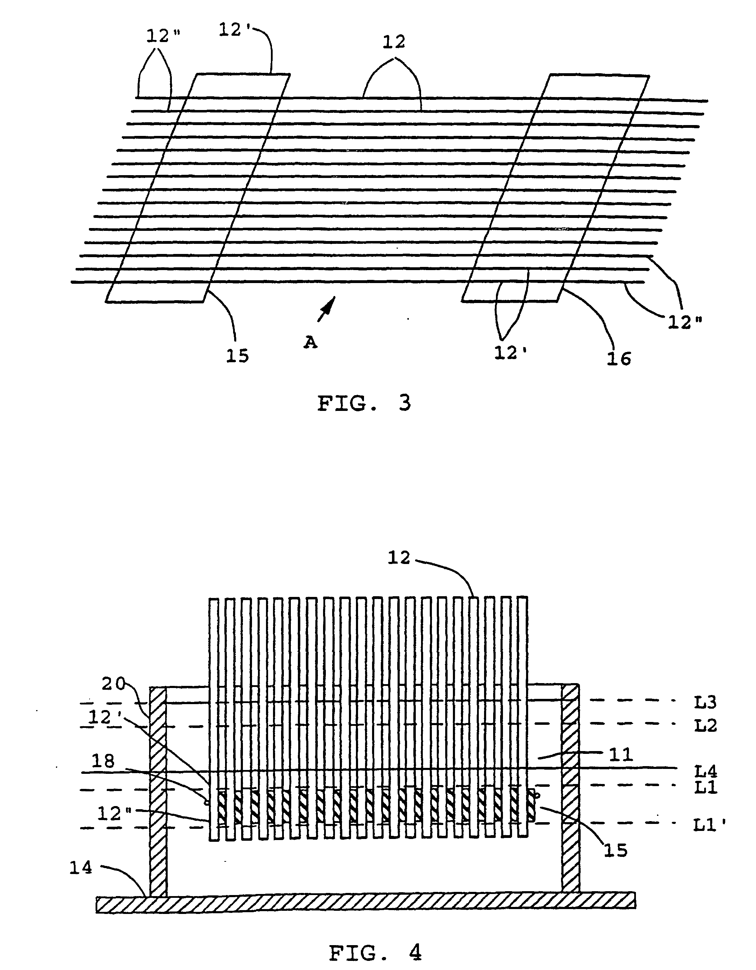

Fig. 3A of the '434 patent discloses an apparatus for withdrawing filtered permeate from a substrate having a gas distribution means adapted to be connected to a source of gas and adapted to discharge bubbles of the gas from near the first face of the header from one or more apertures located within the plurality of membranes, wherein the gas is delivered through a gas line disposed horizontally on the header between groups of fibres.

### SUMMARY OF THE INVENTION

This invention relates to a apparatus for withdrawing filtered permeate from a substrate, the apparatus being of the above-mentioned type comprising a gas distribution means adapted to be connected to a source of gas and adapted to discharge bubbles of the gas from near the first face of the header from one or more apertures located within the plurality of membranes, and is characterized in that the gas distribution means includes a gas delivery tube that is oriented generally vertically when the apparatus is in use, said gas delivery tube protruding upwards from the first face of the header from a location within the plurality of membranes such that the membranes surround the generally vertical gas delivery tube where the membranes extend from the header, said gas delivery tube being arranged to deliver gas from the source of gas along and inside the generally vertical gas delivery tube for the gas to be discharged as bubbles via said aperture(s).

In some embodiments, the gas delivery tube is located axially within a plurality of membranes that surround the gas delivery tube, and the membranes are generally parallel to each other and the gas delivery tube is generally parallel to the membranes, in particular such that bubbles, when discharged from the holes, flow vertically upwards between and parallel to the membranes, the membranes swaying when contacted by bubbles rising between them.

The apertures can be located at various locations around the circumference of the gas delivery tube. The gas delivery tube can either have apertures for discharging bubbles at a plurality of locations along the length of the gas delivery tube or the apertures are located in pipes extending outwards from the gas delivery tube, the outwardly-extending pipes forming a sparger.

The first face of the header can be circular with the gas delivery tube protruding from the center of the first face of the header. In one particular embodiment the gas delivery tube is secured in and at least partially extends through the header.

As disclosed, the membranes and gas delivery tube protrude perpendicular to the first face of the header. In a particular embodiment, the gas delivery tube(s) have a fitting to connect the tube(s) to a supply of gas. Conveniently, the membrane fibres are made from braided yam covered with a water-insoluble polymeric material.

Another aspect of the invention is a system for withdrawing filtered permeate from a substrate, comprising a reservoir containing a substrate at ambient pressure; an apparatus as disclosed above immersed in the substrate such that the first face of the header is generally horizontal and the gas delivery tube extends generally vertically upwards from the first face of the header; a source of suction in fluid communication with the permeate outlet and operable to apply sufficient suction to withdraw permeate from the lumens of the membranes; and an aeration system for supplying a pressurized gas to the tube(s) whereby in use bubbles discharged from the apertures flow vertically upwards between and parallel to the membranes, with the membranes swaying when contacted by the bubbles.

The invention also pertains to the use of an apparatus according to the invention as set out above to filter permeate from a substrate at ambient pressure, in particular wherein the membranes extend along their entire length generally vertically, and bubbles discharged from said apertures scrub the generally vertical membranes, with the membranes swaying when contacted by the bubbles.

The invention also pertains to a process for withdrawing filtered permeate from a substrate comprising the steps of providing a reservoir containing a substrate at ambient pressure; providing an apparatus according to the invention for withdrawing filtered permeate from a substrate as set out above; placing the apparatus in the substrate such that the first face of the header is generally horizontal and the gas delivery tube protrudes generally vertically upwards from the first face of the header; applying suction to the permeate outlet to withdraw permeate from the lumens of the membranes; and supplying a pressurized gas to the tube(s) whereby bubbles discharged from the apertures flow vertically upwards between and parallel to the membranes, with the membranes swaying when contacted by the bubbles.

It has been discovered that for no known reason, fibers which are more than 5% but less than 10% longer than the fixed distance between the opposed faces of the headers of a vertical skein, tend to shear off at the face; and those 10% longer tend to clump up in the bubble zone; and, that a gas-scrubbed vertical skein of restrictedly swayable fibers, provides an optimum configuration of fibers through which bubbles of a fiber-cleansing gas ("scrubbing gas") when flowed vertically upwards, parallel to and along the surfaces of the fibers. In a skein of any desired surface area in the range from about 0.1 m² to 1000 m² or more, provided by densely packed fibers, bubbles in such a configuration are more effective cleansing agents than bubbles which are intercepted by arcuate fibers crossing the path of the rising bubbles. A comparison of skeins with different fiber orientations is provided. Bubbles of an oxygen-containing gas to promote growth of microbes unexpectedly fails to build-up growth of microbes on the surfaces of swaying fibers because the surfaces are "vertically air-scrubbed". Deposits of animate and/or inanimate particles upon the surfaces of fibers are minimized when the restrictedly swayable fibers are kept awash in co-directionally rising bubbles which rise with sufficient velocity to exert a physical scrubbing force (momentum provides the energy) to keep the fibers substantially free of deleterious deposits. Thus, an unexpectedly high flux is maintained in fibers over each unit area of the surface of the skein fibers over a long period.

In a "gas-scrubbed two-header assembly" comprising a skein and a gas-distribution means, the skein fibers are secured in spaced-apart headers, so that the fibers, when deployed in the substrate, acquire a generally vertical profile within the substrate and sway independently within the bubble zone defined by at least one column of bubbles. The length of fibers between opposed surfaces of headers from which they extend, is in a critical range from at least 0.1% (per cent) longer than the distance separating those opposed faces, but less than 5% longer. Usually the length of fibers is less than 2% longer, and most typically, less than 1% longer, so that sway of the fibers is confined within a vertical zone of movement, the periphery of which zone is defined by side-to-side movement of outer skein fibers; and, the majority of these fibers move in a slightly larger zone than one defined by the projected area of one header upon the other. Though the distance between headers is fixed during operation, the distance is preferably adjustable to provide an optimum length of fibers, within the aforesaid ranges, between the headers.

In commercial wastewater treatment of all types skeins are typically in the range from 30 m² to 500 m²; in specific other uses, such as in water treatment in a recreational vehicle, an aquarium for aquatic animals, or, to obtain a solids-free sample of fluid for analysis, a skein of much smaller area, in the range from 0.1 m² to 5 m², referred to as a "self-contained mini-skein", is constructed with its own gas supply means and permeate withdrawal pump.

Permeate may be withdrawn from only one permeate collection means (pan or end-cap), or, in skeins of large surface area greater than 200 m², from both (upper and lower) pans or end-caps. Most preferably, air is introduced between skein fibers by an air-tube potted in any one of several configurations depending upon the configuration of the header in the skein, or, that of plural headers in a bank of skeins.

A novel composite header is provided for a bundle of hollow fiber membranes or "fibers", the composite header comprising a molded, laminated body of arbitrary shape, having an upper lamina formed from a "fixing" (potting) material which is laminated to a lower lamina formed from a "fugitive" potting material. The terminal portions of the fibers are potted in the fugitive potting material when it is liquid, preferably forming a generally rectangular parallelpiped in which the open ends of the fibers (until potted) are embedded and plugged, keeping the fibers in closely spaced-apart substantially parallel relationship. The plugged ends of the fibers fail to protrude through the lower (aft) face of the lower lamina, while the remaining lengths of the fibers extend through the upper face of the lower lamina. The upper lamina extends for a height along the length of the fibers sufficient to maintain the fibers in the same spaced-apart relationship relative to one and another as their spaced-apart relationship in the lower portion. If desired, the composite header may include additional laminae, lower portion. If desired, the composite header may include additional laminae, for example, a "cushioning" lamina overlying the fixing lamina, to cushion each fiber around its embedded outer circumference; and, a "gasketing" lamina to provide a suitable gasketing material against which the permeate collection means may be mounted.

Though the shape of a header is arbitrary, for ease of fabrication, each header of a pair is either a rectangalar parallelpiped or a cylindrical disc. Rectangular vertical skeins are potted in rectangular headers; cylindrical vertical skeins are potted in cylindrical headers. For maximum utilization of space on a header, the fibers are densely packed in rows, or, in a spiral pattern by rolling a large array into a spiral roll and potting each end of the spiral roll directly in a cylindrical resin-confining means. Such resin-confining means is typically a rectangular or cylindrical pan or end-cap. Either configuration of header may be used in a variety of different embodiments as disclosed in the illustrative examples.

### BRIEF DESCRIPTION OF THE DRAWINGS

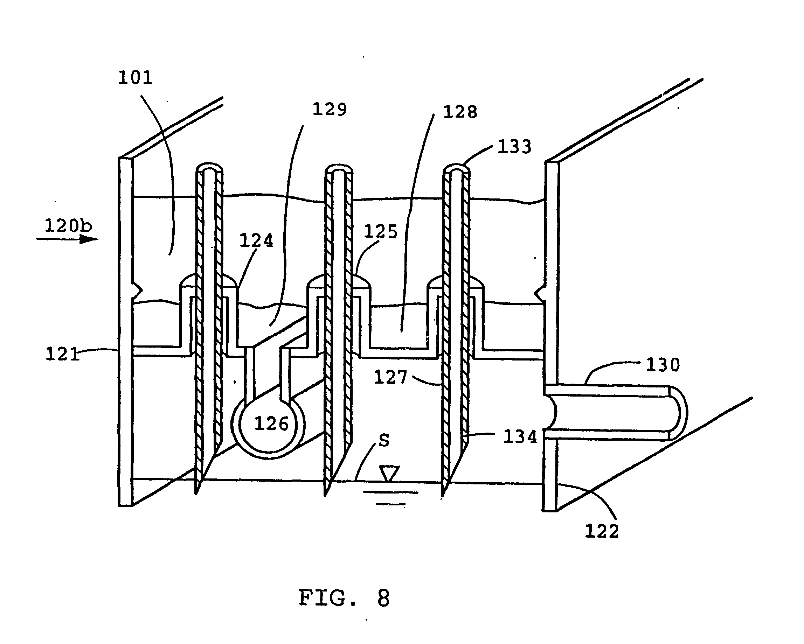

The foregoing and additional objects and advantages of the invention will best be understood by reference to the following detailed description, accompanied by schematic illustrations of preferred embodiments of the invention, in which illustrations like reference numerals refer to like elements. Embodiments of the invention are described and illustrated primarily with reference to Figures 8, 16 and 17, whereas Figures 1 to 15, and 18 to 20 illustrate examples of features useful for understanding and for carrying out the invention. In the drawings:
Figure 1 is a graph in which the variation of flux is plotted as a function of time showing three curves for three runs made with three different arrays, in each case, using the same amount of air, the identical membranes and the same membrane surface area. The results obtained by Yamamoto et al are plotted as curve 2 (under conditions modified to give them the benefit of doubt as to the experimental procedure employed, as explained below); the flux obtained using the gas-scrubbed assembly of the '424 patent is shown as curve 1; and the flux obtained using the gas-scrubbed assembly of this invention is shown as curve 3.
Figure 2 is a perspective exploded view schematically illustrating a membrane device comprising skein fibers which are unsupported and unattached one to another intermediate the headers, with the ends of the fibers potted in a lower header, shown during operation of the device, with a permeate collection pan, and a permeate withdrawal conduit.
Figure 2A is an enlarged detail side elevational view of a side wall of a collection pan showing the profile of a header-retaining step atop the periphery of the pan.
Figure 2B is a bottom plan view of the header showing a random pattern of open ends protruding from the aft face of a header when fibers are potted after they are stacked in rows and glued together before being potted.
Figure 3 is a perspective view of a single array, schematically illustrated, of a row of substantially coplanarly disposed parallel fibers secured near their opposed terminal ends between spaced apart cards. Typically, multiple arrays are assembled before being sequentially potted.
Figure 4 illustrates an end view of a stack of arrays in end view, clamped together, showing that the individual fibers (only the last fiber of each linear array is visible, the remaining fibers in the array being directly behind the last fiber) of each array are separated by the thickness of a strip with adhesive on it, as the stack is held vertically in potting liquid.
Figure 5 is a perspective view schematically illustrating a skein with its integral finished header, its permeate collection pan, and twin air-tubes feeding an integral air distribution manifold potted in the header along an outer edge of the skein fibers.
Figure 6 is a side elevational view of an integral finished header showing details of a permeate pan submerged in substrate, the walls of the header resting on the bottom of a reservoir, and multiple air-tubes feeding integral air distribution manifolds potted in the header along each outer edge of the skein fibers.
Figure 7A is a perspective view schematically illustrating an air-manifold from which vertical air-tubes rise, useful in the invention.
Figure 7B is a perspective view schematically illustrating a tubular air-manifold having a transverse perforated portion, positioned by opposed terminal portions.
Figure 8 is a perspective view of an integral finished header having plural skeins potted in a common header molded in an integral permeate collection means with air-tubes rising vertically through the header between adjacent skeins, and along the outer peripheries of the outer skeins.
Figure 9 is a detail, not to scale, illustratively showing a gas distribution means discharging gas between arrays in a header, and optionally along the sides of the lower header, corresponding to the arrangement of Fig. 3A of the '424 patent.

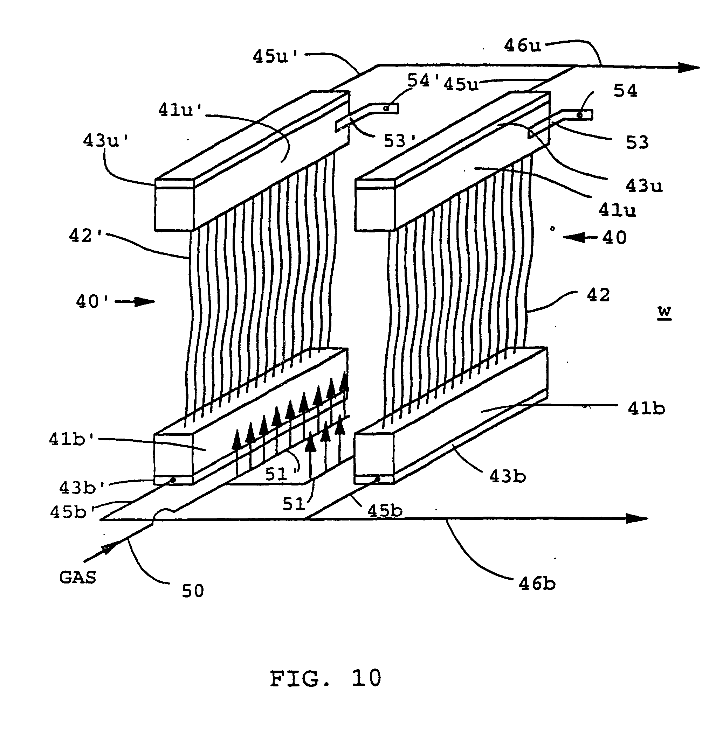

Figure 10 is a perspective view schematically illustrating a pair of skeins in a bank in which the upper headers are mounted by their ends on the vertical wall of a tank. The skeins in combination with a gas-distribution means form a "gas-scrubbing assembly" deployed within a substrate, with the fibers suspended essentially vertically in the substrate. Positioning the gas-distribution means between the lower headers (and optionally, on the outside of skein fibers) generate masses (or "columns") of bubbles which rise vertically, co-directionally with the fibers, yet the bubbles scrub the outer surfaces of the fibers.
Figure 11 is a perspective view of another embodiment of the scrubbing-assembly showing plural skeins (only a pair is shown) connected in a bank with gas-distribution means disposed between successive skeins, and, optionally, with additional gas-distribution means fore and aft the first and last skeins, respectively.
Figure 12 is an elevational view schematically illustrating a bank of skeins mounted against the wall of a bioreactor, showing the convenience of having all piping connections outside the liquid.
Figure 13 is a plan view of the bioreactor shown in Fig 12 showing how multiple banks of skeins may be positioned around the circumference of the bioreactor to form a large permeate extraction zone while a clarification zone is formed in the central portion with the help of baffles.
Figure 14 is a cross-sectional view schematically illustrating a cylindrical skein having upper and lower end-cap integral headers in each of which is directly potted an array of fibers in a finished header sealed at its periphery to the wall of the end-cap without a gasket.
Figure 14A is a bottom plan view of a potted array held as a roll in a fiber-setting form, before the end of the roll is potted in a ring, so as to form an integral header in which the pattern of fibers is spiral
Figure 14B is a bottom plan view of a series of potted cylindrical arrays referred to as "ring arrays" because the ends are secured in stiff cylindrical rings, the arrays being nested with each successive ring array being slid over the previous one. The nested rings are then potted in a resin-confining ring.
Figure 14C is a bottom plan view of a series of planar arrays, the widths of each being chosen so that they may be stacked, chord-like (that is, as successive chords in the resin-confining ring) before the stack is potted in the ring.
Figure 15 is a cross-sectional view schematically illustrating a cylindrical skein and end-cap integral headers as in Fig 14, except that permeate is withdrawn from only the upper header.
Figure 15A is a perspective view of a cross-shaped sparger with a central air-tube and sparging arms.
Figure 16 is a side elevational view schematically illustrating a cylindrical skein in which a ring header is formed first. The ring header is then sealed into an end-cap. In addition to the permeate tube, a rigid air supply tube is inserted through the upper end-cap and upper header into the central portion of the skein, the lower portion of the air supply tube being potted in the lower header, thus functioning as a spacer means, and at the same time, as a support for the upper end-cap.
Figure 17 illustratively shows another embodiment of the skein in which the permeate tube is concentrically disposed within the air supply tube, and both are potted, near their lower ends in the lower header. Ports in the lower end of the air supply tube provide air near the base of the skein fibers.
Figure 18 is a bar graph showing the average flux over a 24 hr period for each of three different orientations of the skein.
Figure 19 is a plot of flux as a function of time, until the flux reaches an equilibrium value, for the same skein with internal and with external aeration.
Figure 20 is a plot of flux as a function of time, until the flux reaches an equilibrium value, for skeins having identical surface area except that the fibers are taut in one, and slack in the other.

### DETAILED DESCRIPTION OF PREFERRED EMBODIMENTS

### The Vertical Skein and the Arrays which form it:

The skein of this invention is used in liquid-liquid microfiltration processes to remove micron, sub-micron and larger suspended solids such as organic molecules, emulsified organic liquids and colloidal or suspended solids, usually from water. Typical applications are (i) in a membrane bioreactor, to produce permeate as purified water; (ii) filtration of secondary effluent from wastewater treatment, to remove suspended solids and pathogenic bacteria; (iii) clarification of aqueous streams to produce drinking water (removal of colloids, long chain carboxylic acids and pathogens); (iv) separation of a permeable liquid component in biotechnology broths; (v) dewatering of metal hydroxide sludges; and, (vi) filtration of oily wastewater, inter alia.

Typically the skein is configured so that all connections for fluids entering or leaving the skein are provided in the upper header. Permeate is most preferably withdrawn through a tube passing through the upper header whether (i) the lower header collects no permeate (as explained below); or (ii) permeate collects in both the upper and lower headers. The skein preferably operates in a substrate held in a reservoir at atmospheric pressure (1 bar) or above, in the range up to about 10 bar in a pressurized vessel, without being confined within the shell of a module.

One or more arrays are potted in headers, the upper (or "fore") and lower (or "aft") surfaces of which are in horizontal (x-y) planes. Instead of a single continuous array, plural arrays may be made and joined together, end-to-end successively, to form a much larger array which can be extended.

Operation of the skein is affected by (a) the fiber chosen, (b) the amount of air used, and (c) the substrate to be filtered. The goal is to filter a slow-moving or captive substrate in a large container under ambient or elevated pressure, but preferably under essentially ambient pressure, and to maximize the efficiency of a skein which does so (filters) practically and economically

By operating at ambient pressure, mounting the integral headers of the skein within a reservoir of substrate, and by allowing the fibers restricted movement within the bubble zone in a substrate, we minimize damage to the fibers. Because, a header secures at least 10, preferably from 50 to 50,000 fibers, each generally at least 0.5 m long, in a skein, it provides a high surface area for filtration of the substrate.

### The Fibers and How they are Densely Packed:

The fibers divide a reservoir into a "feed zone" and a withdrawal zone referred to as a "permeate zone". The feed of substrate is introduced externally (referred to as "outside-in" flow) of the fibers, and resolved into "permeate" and "concentrate" streams. The skein, or a bank of skeins of this invention is most preferably used for microfiltration with "outside-in" flow. Though at least one skein is replaceably disposed in a small reservoir having a volume up to about 10 L (liters) and even up to about 100 L or more, a bank of skeins is preferably used in a relatively large reservoir having a volume in excess of 1000 L, such as a flowing stream, more typically a pond or tank. Most typically, a bank or plural banks with collection means for the permeate, are mounted in a large tank under atmospheric pressure, and permeate is withdrawn from the tank

The fibers used to form the skein may be formed of any conventional membrane material provided the fibers are flexible and have an average pore cross sectional diameter for microfiltration, namely in the range from about 1000Å. to 10000Å. Typically fibers range from 1 m to about 5 m long, depending upon the dimensions of the body of substrate (depth and width) in which the skein is deployed. Preferred fibers operate with a transmembrane pressure diff erential in the range from 7 kPa (1 psi) - 69 kPa (10 psi) and are used under ambient pressure with the permeate withdrawn under gravity. The fibers are chosen with a view to perform their desired function, and the dimensions of the skein are determined by the geometry of the headers and length of the fibers. It is unnecessary to confine a skein in a modular shell, and a skein is not.

For hollow fiber membranes, the outside diameter ("o.d.") of a fiber is at least 20µm and may be as large as about 3 mm, typically being in the range from about 0.1 mm to 2 mm. The larger the o.d. the less desirable the ratio of surface area per unit volume of fiber. The fiber wall thickness is at least 5*µ*m and may be as much as 1.2 mm, typically being in the range from about 15% to about 60% of the o.d. of the fiber, most preferably from 0.5 mm to 1.2 mm.

The number of fibers in a single array is arbitrary, typically being in the range from about 1000 to about 10000 for commercial applications, and the preferred surface area for a skein is preferably at least > 1 m², typically from 10 m² to 100 m². The center to center distance of adjacent fibers is preferably in the range from 1.2 (1.2d) to about 5 times (5d) the o.d. 'd' of a fiber. Preferred center-to-center spacing is from about 1.5d to 2d. The packing density of fibers, that is, the number of fibers per unit area of header preferably ranges from 4 to 50 fibers/cm² depending upon the diameters of the fibers.

The particular method of securing the fibers in each of the headers is not narrowly critical, the choice depending upon the materials of the header and the fiber, and the cost of using a method other than potting. However, it is essential that each of the fibers be secured in fluid-tight relationship within each header to avoid contamination of permeate. This is effected by potting the fibers essentially vertically, in closely-spaced relationship, substantially concentrically.

Preferred fibers are made of organic polymers and ceramics, whether isotropic, or anisotropic, with a thin layer or "skin" on the outside surface of the fibers. Fibers may be made from braided yarn covered with a water-insoluble polymeric material such as those disclosed in U.S. Patent No. 5,472,607. Preferred organic polymers for fibers are polysulfones, poly(styrenes), including styrene-containing copolymers such as acrylonitrile-styrene, butadiene-styrene and styrene-vinylbenzylhalide copolymers, polycarbonates, cellulosic polymers, polypropylene, poly(vinyl chloride), poly(ethylene terephthalate), and the like disclosed in U.S. Patent No. 4,230,463 the disclosure of which is incorporated by reference thereto as if fully set forth herein. Preferred ceramic fibers are made from alumina, by E. I. duPont deNemours Co. and disclosed in U.S. Patent No. 4,069,157.

### The Headers:

One integral header of a skein is displaceable in any direction relative to the other, either longitudinally (x-axis) or transversely (y-axis), only prior to submerging the skein for operation. To use a skein, the headers are vertically spaced apart in parallel relationship within a reservoir, for example, by mounting one header above another against a vertical wall of the reservoir which functions as a spacer means. This is also true prior to spacing one header directly above another with other spacer means such as bars, rods, struts, I-beams, channels, and the like, to assemble plural skeins into a "bank or cluster of skeins" ("bank" for brevity). After assembly into a bank, a segment intermediate the potted ends of each individual fiber is displaceable along either the x- or the y-axis, because the fibers are loosely held in the skein.

Most preferably, each integral header is directly potted in a suitable material from which the header of cured potting resin is not removed, requiring no gasket (hence referred to as "gasketless") between the cured resin of the header and the inner periphery of the permeate collection means. When the integral header is adhesively secured in a pan or "end-cap" to form a permeate-collection zone, again, no gasket is required, though one may be used if the integral header is to be disassembled.

The fixing material to fix the fibers in a finished header (or fixing lamina) is most preferably either a thermosetting or thermoplastic synthetic resinous material, optionally reinforced with glass fibers, boron or graphite fibers and the like. Thermoplastic materials may be crystalline, such as polyolefins, polyamides (nylon), polycarbonates and the like, semi-crystalline such as polyetherether ketone (PEEK), or substantially amorphous, such as poly(vinyl chloride) (PVC), polyurethane and the like. Thermosetting resins commonly include polyesters, polyacetals, polyethers, cast acrylates, thermosetting polyurethanes and epoxy resins. Most preferred as a "fixing" material (so termed because it fixes the locations of the fibers relative to each other) is one which when cured is substantially rigid in a thickness of about 2 cm, and referred to generically as a "plastic" because of its hardness. Such a plastic has a hardness in the range from about Shore D 30 to Rockwell R 110 and is selected from the group consisting of epoxy resins, phenolics, acrylics, polycarbonate, nylon, polystyrene, polypropylene and ultra-high molecular weight polyethylene (UHMW PE). Polyurethane such as is commercially available under the brand names Adiprene® from Uniroyal Chemical Company and Airthane® from Air Products, and commercially available epoxy resins such as Epon 828 are excellent fixing materials.

The resulting membrane device comprises, (i) a vertical skein of a multiplicity of restrictedly swayable fibers, together having a surface area in the range from 1 m² to 1000 m², preferably from 10 m² to 100 m², secured only in spaced-apart headers; and (ii) a gas-scrubbing means which produces a column of bubbles rising within and near the base of the skein, and engulfing the skein. Bubbles generated have an average diameter in the range from about 0.1 mm to about 25 mm, or even larger. A liquid component is selectively removed from the substrate.

### The Gas-Scrubbed Assembly:

A gas-scrubbed assembly comprises, (a) at least one skein, or a bank of gas-scrubbed skeins of fibers which separate a desired permeate from a large body of multicomponent substrate having finely divided particulate matter in the range from 0.1µm- 44µm dispersed therein, (b) each skein comprising at least 20 fibers having upper and lower terminal portions potted spaced-apart, in upper and lower headers, respectively, the fibers being restrictedly swayable in a bubble zone, and (c) a shaped gas-distribution means adapted to provide a profusion of vertically ascending bubbles in a column above and in close proximity to the upper face of the lower header, the length of the fibers being from at least 0.1% but less than 5% greater than the distance between the opposed faces of the headers. The shaped gas-distribution means has through-passages therein through which gas is flowed, continuously or intermittently, at a flow rate which is proportional to the number of fibers. The flow rate is generally in the range from 0.47 - 14 cm³/sec per fiber (0.001 - 0.03 scfm/fiber) (standard ft³ per minute per fiber), typically in the range from 1.4 - 4.2 cm³/sec/fiber (0.003 - 0.009 scfm/fiber). In a mini-skein, The surface area of the fibers is not used to define the amount of air used because the air travels substantially vertically along the length of each fiber.

The gas-scrubbed assembly is used (i) in combination with vertically adjustable spacer means for mounting the headers in vertically spaced apart relationship, in open fluid communication with (ii) collection means for collecting the permeate; means for withdrawing the permeate; and, (iii) sufficient air to generate enough bubbles flowing upwardly through the skein, between and parallel to the fibers so as to keep the surfaces of the fibers substantially free from deposits of live microorganisms as well as small inanimate particles which may be present in the substrate.

With surprisingly little cleansing gas discharged from a sparger disposed between fibers near their base, the flux at equilibrium is maintained over a long period, typically from 50 hr to 1500 hr. The sparger of a gas-distribution means is disposed with a pipe portion protruding from the upper face of the lower header to generate a column of rising bubbles within which column the fibers are awash in bubbles. The type of gas (air) manifold is not narrowly critical provided it delivers bubbles in a preferred size range from about 0.1 mm to 25 mm, measured within a distance of from 1 cm to 50 cm from the through-passages generating them.

### Operation of the System:

Operation of the system relies upon positioning at least one skein, preferably a bank, close to a source of sufficient air or gas to maintain a desirable flux, and, to enable permeate to be collected from at least one header. A desirable flux is obtained, and provides the appropriate transmembrane pressure differential of the fibers under operating process conditions.

The transmembrane pressure differential is preferably generated with a conventional non-vacuum pump if the transmembrane pressure differential is sufficiently low in the range from 0.7 kPa (0.1 psi) to 101 kPa (1 bar), provided the pump generates the requisite suction. A pump which generates minimal suction may be used if an adequate "liquid head" is provided between the surface of the substrate and the point at which permeate is withdrawn. Moreover, as explained in greater detail below, once the permeate flow is induced by a pump, the pump may not be necessary, the permeate continuing to flow under a "siphoning effect". Clearly, operating with fibers subjected to a transmembrane pressure differential in the range up to 101 kPa (14.7 psi), a non-vacuum pump will provide adequate service in a reservoir which is not pressurized; and, in the range from 101 kPa to about 345 kPa (50 psi), by superatmospheric pressure generated by a high liquid head, or, by a pressurized reservoir.

A process for separating a permeate from a substrate while maintaining relatively clean surfaces of fibers in an array, comprises, submerging a skein of restrictedly swayable substantially vertical fibers within the substrate so that upper and lower end-caps of the skein are mounted one above the other with a multiplicity of fibers secured between headers, the fibers having their opposed terminal portions potted in open fluid communication with at least one header; the fibers operating under a transmembrane pressure differential in the range from about 0.7 kPa (0.1 psi) to about 345 kPa (50 psi), and a length from at least 0.1% to about 2% greater than the direct distance between the opposed upper and lower faces of cured resin in the headers, so as to present, when the fibers are deployed, a generally vertical skein of fibers; an essentially constant flux substantially the same as the equilibrium flux initially obtained, indicating that the surfaces of the fibers are substantially free from further build-up of deposits once the equilibrium flux is attained; collecting the permeate; and, withdrawing the permeate.

The foregoing process may be used in the operation of an anaerobic or aerobic biological reactor which has been retrofitted with the membrane device of this invention. The anaerobic reactor is a closed vessel and the scrubbing gas is a molecular oxygen-free gas, such as nitrogen.

An aerobic biological reactor may be retrofitted with at least one gas-scrubbed bank of vertical cylindrical skeins, each skein made with from 500 to 5000 fibers in the range from 1 m to 3 m long, in combination with a permeate collection means, to operate the reactor without being encumbered by the numerous restrictions and limitations imposed by a secondary clarification system.

Typically, there is no cross flow of substrate across the surface of the fibers in a "dead end" tank. If there is any flow of substrate through the skein in a dead end tank, the flow is due to aeration provided beneath the skein, or to such mechanical mixing as may be employed to maintain the solids in suspension. There is generally more flow and higher fluid velocity through the skein in a tank into which substrate is being continuously flowed, but the velocity of fluid across the fibers is generally too insignificant to deter growing microorganisms from attaching themselves, or suspended particles, e.g. microscopic siliceous particles, from being deposited on the surfaces of the fibers.

Fig 1 presents the results of a comparison of three runs made, one using the teachings of Yamamoto in his '89 publication (curve 2), but using an aerator which introduced air from the side and directed it radially inwards, as is shown in Chiemchaisri et al. A second run (curve 1) uses the gas-scrubbed assembly of the '424 patent, and the third run (curve 3) uses a gas-scrubbed skein as described herein except that the headers were rectangular parallelpipeds. The flux obtained with an assembly of an inverted parabolic array with an air distributor means (Yamamoto et al), as disclosed in **Wat. Sci. Tech.** Vol. 21, Brighton pp 43-54, 1989, and, the parabolic array by Cote et al in the '424 patent, are compared to the flux obtained with the vertical skein of this invention.

The comparison is for the three assemblies having fibers with nominal pore size 0.2 µm with essentially identical bores and surface area in 80 L tanks filled with the same activated sludge substrate. The differences between the stated experiment of Yamamoto et al, and that of the '424 patent are of record in the '424 patent, and the conditions of the comparison are incorporated by reference thereto as if fully set forth herein. The vertical skein used herein differs from the '424 skein only in the vertical configuration of the 280 fibers, each of which was about 1% longer than the distance between the spaced apart headers during operation. The flow rate of air for the vertical skein is 1.4 m³/hr/m² using a coarse bubble diffuser.

It will be evident from Fig 1 in which the flux, liters per meter² per hr per unit pressure (conventionally written as (Lmh/kPa), is plotted as a function of operating time for the three assemblies, that the curve, identified as reference numeral 3 for the flux for the vertical skein, provides about the same flux as the parabolic skein, identified as reference numeral 1. As can be seen, each flux reaches an equilibrium condition within less than 50 hr, but after about 250 hr, it is seen that the flux for the inverted parabolic array keeps declining but the other two assemblies reach an equilibrium.

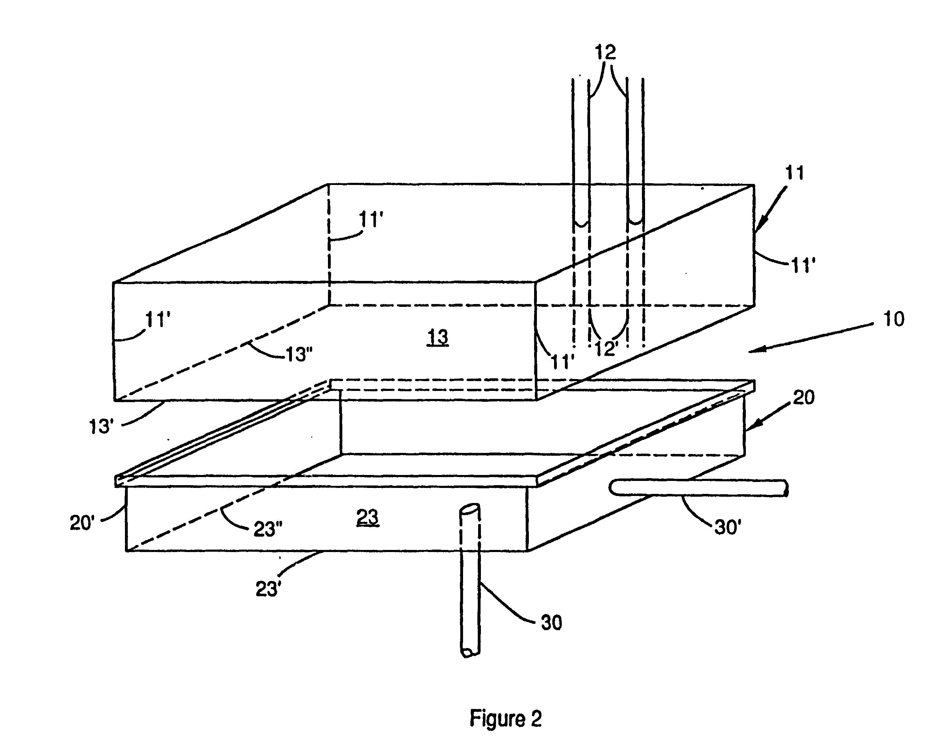

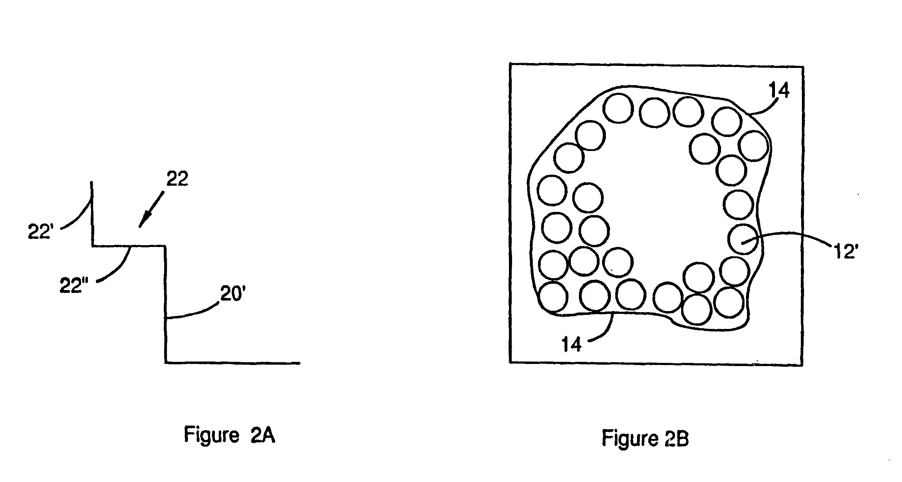

Referring to Fig 2 there is illustrated, in exploded view a portion of a membrane device referred to as a "vertical skein" 10, comprising a lower header 11 of a pair of headers, the other upper header (not shown) being substantially identical; collection pan 20 collects permeate which is withdrawn through conduit 30. The header shown is a rectangular prism but could be cylindrical if desired. Though densely packed, the fibers 12 are not in contact with each other but spaced apart by the cured resin between them.

As illustrated, the open ends of the terminal portions 12' of the fibers are in the same plane as the lower face of the header 11 because the fibers are conventionally potted and the header sectioned to expose the open ends. A specific potting procedure in which the trough of a U-shaped bundle of fibers is potted, results in forming two headers. This procedure is described in the '424 patent (col 17, lines 44-61); however, even cutting the potted fibers with a thin, highspeed diamond blade, tends to damage the fibers and initiate the collapse of the circumferential wall. In another conventional method of potting fibers, described in U.S. Patent No. 5,202,023, bundled fibers have their ends dipped in resin or paint to prevent resin penetration into the bores of the fibers during the potting process. The ends of the bundle are then placed in molds and uncured resin added to saturate the ends of the fiber bundle and fill the spaces between the individual fibers in the bundle and the flexible tubing in which the bundle is held. The cured, molded ends are removed from the molds and the molded ends cut off (see, bridging cols 11 and 12). In each prior art method, sectioning the mold damages the embedded fibers.

Therefore a novel method is used to form a header 11 in the form of a rectangular prism. The method requires forming a composite header with two liquids. A first liquid fugitive material, when solidified (cured), forms a "fugitive lamina" of the composite header; a second liquid of non-fugitive fixing material forms a "fixing lamina".

The first liquid is poured around terminal portions of fibers, allowed to cool and solidify into a fugitive lamina; the fibers in the fugitive lamina are then again potted, this time by pouring the second liquid over the solid fugitive lamina.

In greater detail, the method for forming a finished header for skein fibers comprises,
forming a bundle of fibers in at least one array supported on a support means having a thickness corresponding to a desired lateral spacing between adjacent fibers;
holding the bundle in a first liquid with terminal portions of the fibers submerged, until the liquid solidifies into a first shaped lamina, provided that the first liquid is unreactive with material of the fibers;
pouring a second liquid over the first shaped lamina to embed the fibers to a desired depth, and solidifying the second liquid to form a fixing lamina upon the first shaped lamina, the second liquid also being substantially unreactive with either the material of the fibers or that of the first shaped lamina;
whereby a composite header is formed in which terminal portions of the fibers are potted, preferably in a geometrically regular pattern, the composite header comprising a laminate of a fugitive lamina of fugitive material and a contiguous finished header of fixing lamina; and thereafter,
removing the first shaped lamina without removing a portion of the fixing lamina so as to leave the ends of the fibers open and protruding from the aft face of the header, the open ends having a circular cross-section.

The step-wise procedure for forming an array with the novel header is described with respect to an array illustrated in Fig 3, as follows:

Fibers 12 are each cut to about the same length with a sharp blade so as to leave both opposed ends of each fiber with an essentially circular cross-section. The fibers are coplanarly disposed side-by-side in a linear array on a planar support means such as strips or cards 15 and 16. Preferably the strips are coated with an adhesive, e.g. a commercially available polyethylene hot-melt adhesive, so that the fibers are glued to the strips and opposed terminal portions 12" respectively of the fibers, extend beyond the strips. Intermediate portions 12' of the fibers are thus secured on the strips. Alternatively, the strips may be grooved with parallel spaced-apart grooves which snugly accommodate the fibers. The strips may be flexible or rigid. If flexible, strips with fibers adhered thereto, are in turn, also adhered to each other successively so as to form a progressively stiffer stack for a header having a desired geometry of potted fibers. To avoid gluing the strips, a regular pattern of linear rows may be obtained by securing multiple arrays on rigid strips in a stack, with rubber bands 18 or other clamping means. The terminal portions 12" are thus held in spaced-apart relationship, with the center to center distance of adjacent fibers preferably in the range from 1.2 (1.2d) to about 5 times (5d) the o.d. 'd' of a fiber, more preferably in the range from 1.5d to 2d. Preferably, the thickness of a strip is about the same as, or relatively smaller than the o.d. of a fiber, preferably from about 0.5d to 1d thick, which becomes the spacing between adjacent outside surfaces of fibers in successive linear arrays.

Having formed a first array, second and third arrays (not shown because each would appear essentially identical to the first) is prepared in a manner analogous to the first, and overlaid thereupon. Additional arrays are overlaid until the desired number of arrays are bundled, and the bundle held vertically to present the lower portion of the bundle to be potted first.

Referring to Fig 4, there is schematically illustrated a rectangular potting pan 17 the length and width dimensions of which correspond substantially to the longitudinal (x-axis) and transverse (y-axis) dimensions respectively, of the desired header. The lower portion of the bundle is submerged in a first liquid which rises to a level indicated by L1, in the pan 17. Most preferred is a liquid wax, preferably a water-soluble wax having a melting point lower than 75°C, such as a polyethylene glycol (PEG) wax.

The depth to which the first liquid is poured will depend upon whether the strips 15 are to be removed from, or left in the finished header.
**A**. First illustrated is the potting of skein fibers in upper and lower headers from which the strips will be removed.
   (1) A first shaped lamina having a thickness L1 (corresponding to the depth to which the first liquid was poured) is formed from about 5 - 10 cm thick (fugitive) so that 12' and 12" are spaced apart and ends of the fibers are plugged.
   (2) The second liquid, a curable, water-insoluble liquid potting resin, or reactive components thereof, is poured over the surface of the fugitive lamina to surround the fibers, until the second liquid rises to a level L2. It is solidified to form the fixing lamina (which will be the finished header) having a thickness measured from the level L1 to the level L2 (the thickness is written "L1-L2", typically from about 1 cm to about 5 cm) maintains the relative positions of the vertical fibers. A first composite header is thus formed having the combined thicknesses of the fugitive and fixing laminae.
   (3) In a manner analogous to that described immediately hereinabove, the upper portion of the bundle is potted in a second composite header.
   (4) The composite headers are demolded from their potting pans and hot air blown over them to melt the fugitive laminae, leaving only the finished headers, each having a thickness L1-L2. The fugitive material is then reused. Alternatively, a water-soluble fugitive material may be placed in hot water to dissolve the material, and the material is recovered from its water solution.
   (5) The ends of the fibers left protruding from the permeate-discharging aft faces of the headers, are open and retain a circular cross-section.
**B**. Illustrated second is potting without removing the strips.
   (1) The first liquid is poured to a level L1' below the cards, to a depth in the range from about 1 - 2.5 cm, and solidified, foriming fugitive lamina L1'.
   (2) The second liquid is then poured over the fugitive lamina to depth L2 and solidified, forming a composite header with a fixing lamina having a thickness L1'-L2.
   (3) The composite header is demolded and the fugitive lamina removed, leaving the terminal portions 12" protruding from the aft face of the finished header, which aft face is formed at what had been the level L1'. The finished header having a thickness L1'-L2 embeds the strips 15 (along with the rubber bands 18, if used).
**C.** Illustrated third is potting to form a cushioning lamina embedding the fibers on the opposed (fore) faces of the headers from which the strips will be removed.
   The intermittent 'snapping' motion of the fibers tends to break fibers around their circumferences, at the interface of the fore face and substrate. To combat hardness of the "fixing lamina" a "cushioning lamina" is formed of material softer than the fixing lamina, integrally therewith, by pouring cushioning liquid (so termed for its function when cured) over the fixing lamina to a depth L3 as shown in Fig 4. Its depth provides 'give' around the circumferences of the fibers to minimize the risk of shearing. Such cushioning liquid, when cured is rubbery, having a hardness in the range from about Shore A 30 to Shore D 45, and is preferably a polyurethane or silicone or other rubbery material which will adhere to the fixing lamina. Upon removal of the fugitive lamina, the finished header thus formed has the combined thicknesses of the fixing lamina and the cushioning lamina, namely L1-L3 when the strips 15 are cut away.
**D.** Illustrated fourth is forming a gasketing lamina.

Whichever finished header is made, it is preferably fitted into a permeate pan 20 as illustrated in Fig 2 with a peripheral gasket. Because it is easier to seal the pan against a gasketing lamina, than against a peripheral narrow gasket, a gasketing material having a hardness in the range from Shore A 40 to Shore D 45, forms a desirable gasketing lamina integrally with the aft face of the finished header. In the embodiment in which the strips are cut away, the fugitive lamina is formed as before, and a gasketing liquid (so termed because it forms the gasket when cured) is poured over the surface of the fugitive lamina to a depth L4. The gasketing liquid is then cured. Removing the fugitive lamina, and cutting the strips 15 away, leaves the finished header having a combined thicknesses of the gasketing lamina (L1-L4), the fixing lamina (L4-L2) and the cushioning lamina (L2-L3), namely an overall L1-L3.

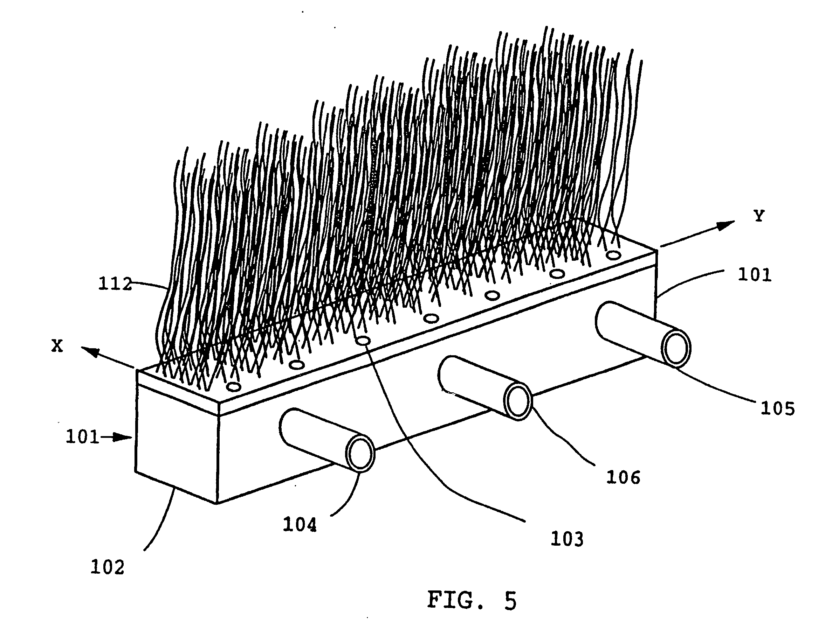

In another embodiment, to avoid securing the pan to the header with a gasketing means, and, to avoid positioning one or more gas-distribution manifolds in an optimum location near the base of the skein fibers after a skein is made, the manifolds are formed integrally with a header. Referring to Fig 5 there is illustrated in perspective view an "integral single skein" 100 having an integral finished header 101 and permeate pan 102 with a permeate withdrawal nipple 106, and fitted with vertical air-tubes 103 which are to be embedded in the finished header. The air-tubes are preferably manifolded on either side of the skein fibers, to feeder air-tubes 104 and 105 which are snugly inserted through grommets in the walls of the pan. The permeate nipple 106 is then plugged, and a stack of arrays is held vertically in the pan in which a fugitive lamina is formed embedding both the ends of the fibers and the lower portion of the vertical air-tubes 103. A fixing lamina is then formed over the fugitive lamina, embedding the fibers to form a fixing lamina through which protrude the open ends of the air-tubes 103. The fugitive lamina is then melted and withdrawn through the nipple 106. In operation, permeate collects in the permeate pan and is withdrawn through nipple 106.

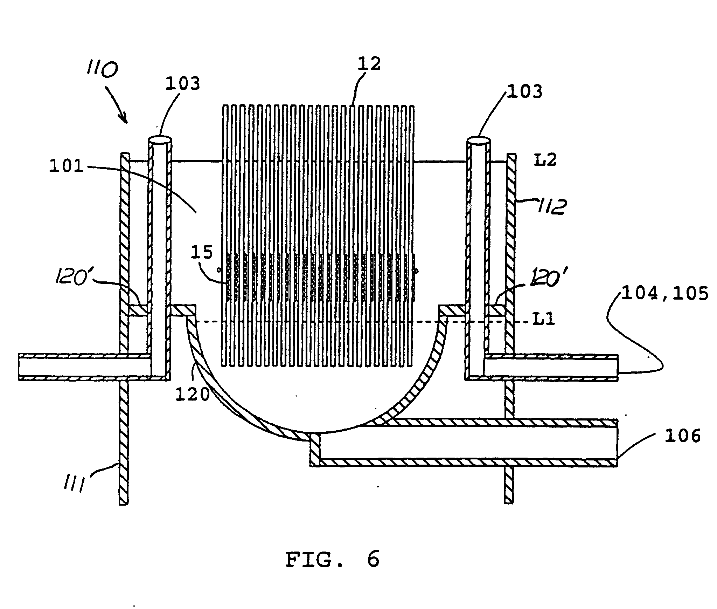

Fig 6 illustrates a cross-section of an integral single skein 110 with another integral finished header 101 having a thickness L1-L2, but without a cushioning lamina, formed in a procedure similar to that described hereinabove. A permeate pan 120 with outwardly flared sides 120' and transversely spaced-apart through-apertures therein, is prefabricated between side walls 111 and 112 so the pan is spaced above the bottom of the reservoir.

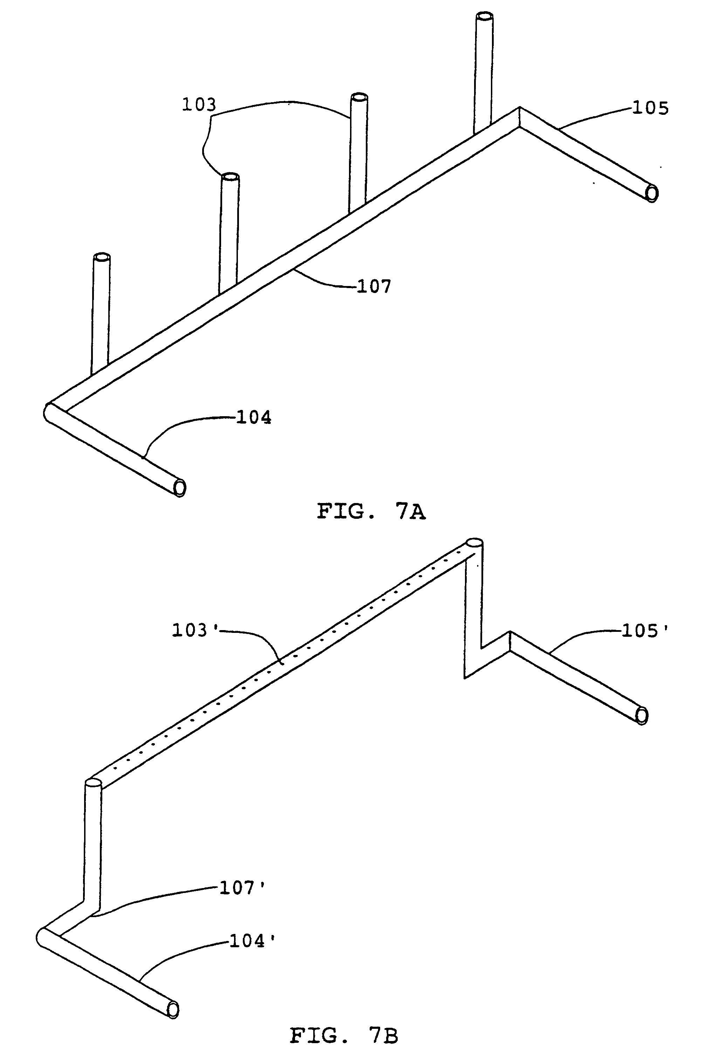

A pair of air-manifolds 107 such as shown in Figs 7A or 7B, is positioned and held in mirror-image relationship with each other adjacent the permeate pan 120, with the vertical air-tubes 103 protruding through the apertures in sides 120', and the ends 104 and 105 protrude from through-passages in the vertical walls on either side of the permeate pan. Permeate withdrawal nipple 106 (Fig 6) is first temporarily plugged. The stack of strips 15 is positioned between air-tubes 103, vertically in the pan 120 which is filled to level L1 to form a fugitive lamina, the level being just beneath the lower edges of the strips 15 which will not be removed. When solidified, the fugitive lamina embeds the terminal portions of the fibers 12 and also fills permeate tube 106. Then the second liquid is poured over the upper surface of the fugitive lamina until the liquid covers the strips 15 but leaves the upper ends of the air-tubes 103 open. The second liquid is then cured to form the fixing lamina of the composite header which is then heated to remove the fugitive material through the permeate nozzle 106 after it is unplugged.

Fig 7A schematically shows in perspective view, an air-manifold 107 having vertical air-tubes 103 rising from a transverse header-tube which has longitudinally projecting feeder air-tubes 104 and 105. The bore of the air-tubes which may be either "fine bubble diffusers", or "coarse bubble diffusers", or "aerators", is chosen to provide bubbles of the desired diameter under operating conditions, the bore typically being in the range from 0.1 mm to 5 mm. Bubbles of smaller diameter are preferably provided with a perforated transverse tube 103' of an air-manifold 107' having feeder air-tubes 104' and 105', illustrated in Fig 7B. In each case, the bubbles function as a mechanical brush.

The skein fibers for the upper header of the skein are potted in a manner analogous to that described above in a similar permeate pan to form a finished header, except that no air manifolds are inserted.

Referring to Fig 8 there is schematically illustrated, in a cross-sectional perspective view, an embodiment in which a bank of two skeins is potted in a single integral finished header enclosure, referred to generally by reference numeral 120b. The term "header enclosure" is used because its side walls 121 and 122, and end walls (not shown) enclose a plenum in which air is introduced. Instead of a permeate pan, permeate is collected from a permeate manifold which serves both skeins. Another similar upper enclosure 120u (not shown), except that it is a flat-bottomed channel-shaped pan (inverted for use as the upper header) with no air-tubes molded in it, has the opposed terminal portions of all the skein fibers potted in the pan. For operation, both the lower and upper enclosures 120b and 120u, with their skein fibers are lowered into a reservoir of the substrate to be filtered. The side walls 121 and 122 need not rest on the bottom of the reservoir, but may be mounted on a side wall of the reservoir.

The side walls 121 and 122 and end walls are part of an integrally molded assembly having a platform 123 connecting the walls, and there are aligned multiple risers 124 molded into the platform. The risers resemble an inverted test-tube, the diameter of which need only be large enough to have an air-tube 127 inserted through the top 125 of the inverted test-tube. As illustrated, it is preferred to have "n + 1" rows of air-tubes for "n" stacks of arrays to be potted. Crenelated platform 123 includes risers 124 between which lie channels 128 and 129. Channels 128 and 129 are each wide enough to accept a stack of arrays of fibers 12, and the risers are wide enough to have air-tubes 127 of sufficient length inserted therethrough so that the upper open ends 133 of the air-tubes protrude from the upper surface of the fixing material 101. The lower ends 134 of the air-tubes are sectioned at an angle to minimize plugging, and positioned above the surface S of the substrate. The channel 129 is formed so as to provide a permeate withdrawal tube 126 integrally formed with the platform 123. Side wall 122 is provided with an air-nipple 130 through which air is introduced into the plenum formed by the walls of the enclosure 120b, and the surface S of substrate under the platform 123. Each stack is potted as described in relation to Fig 6 above, most preferably by forming a composite header of fugitive PEG wax and epoxy resin around the stacks of arrays positioned between the rows of risers 124, making sure the open ends of the air-tubes are above the epoxy fixing material, and melting out the wax through the permeate withdrawal tube 126. When air is introduced into the enclosure the air will be distributed through the air-tubes between and around the skeins.

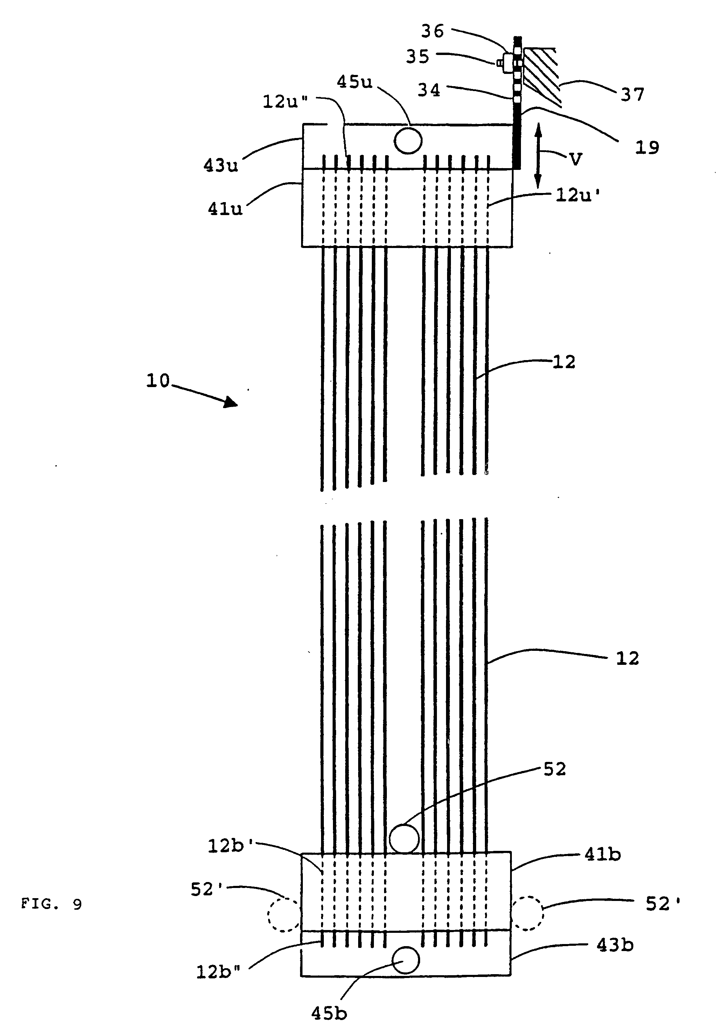

Referring to Fig 9 there is shown a schematic illustration of a skein having upper and lower headers 41u and 41b respectively, and in each, the protruding upper and lower ends 12u" and 12b" are evidence that the face of the header was not cut to expose the fibers. The height of the contiguous intermediate portions 12u' and 12b' respectively, corresponds to the cured depth of the fixing material.

It will now be evident that the essential feature of the foregoing potting method is that a fugitive lamina is formed which embeds the openings of the terminal portions of the fibers before their contiguous intermediate portions 12u' and 12u" and 12b' and 12b" are fixed respectively in a fixing lamina of the header. An alternative choice of materials is the use of a fugitive potting compound which is soluble in a non-aqueous liquid in which the fixing material is not soluble. Still another choice is to use a water-insoluble fugitive material which is also insoluble in non-aqueous liquids typically used as solvents, but which fugitive material has a lower melting point than the final potting material which may or may not be water-soluble.

The fugitive material is inert relative to both, the material of the fibers as well as the final potting material to be cast, and the fugitive material and fixing material are mutually insoluble. Preferably the fugitive material forms a substantially smooth-surfaced solid, but it is critical that the fugitive material be at least partially cured, sufficiently to maintain the shape of the header, and remain a solid above a temperature at which the fixing material is introduced into the header mold. The fugitive lamina is essentially inert and insoluble in the final potting material, so that the fugitive lamina is removably adhered to the fixing lamina.

The demolded header is either heated or solvent extracted to remove the fugitive lamina. Typically, the fixing material is cured to a firm solid mass at a first curing temperature no higher than the melting point or Tg of the fugitive lamina, and preferably at a temperature lower than about 60°C; the firm solid is then post-cured at a temperature high enough to melt the fugitive material but not high enough to adversely affect the curing of the fixing material or the properties of the fibers. The fugitive material is removed as described hereinafter, the method of removal depending upon the fugitive material and the curing temperature of the final potting material used.

Referring further to Fig 2, the header 11 has front and rear walls defined by vertical (z-axis) edges 11' and longitudinal (x-axis) edges 13'; side walls defined by edges 11' and transverse (y-axis) edges 13"; and a base 13 defined by edges 13' and 13".

The collection pan 20 is sized to snugly accommodate the base 13 above a permeate collection zone within the pan. This is conveniently done by forming a rectangular pan having a base 23 of substantially the same length and width dimensions as the base 13. The periphery of the pan 20 is provided with a peripheral step as shown in Fig 2A, in which the wall 20' of the pan terminates in a step section 22, having a substantially horizontal shoulder 22" and a vertical retaining wall 22'.

Fig 2B is a bottom plan view of the lower face of header 13 showing the open ends of the fibers 12' prevented from touching each other by potting resin. The geometrical distribution of fibers provides a regular peripheral boundary 14 (shown in dotted outline) which bounds the peripheries of the open ends of the outermost fibers.

Permeate flows from the open ends of the fibers onto the base 23 of the pan 20, and flows out of the collection zone through a permeate withdrawal conduit 30 which may be placed in the bottom of the pan in open flow communication with the inner portion of the pan. When the skein is backwashed, backwashing fluid flows through the fibers and into the substrate. If desired, the withdrawal conduit may be positioned in the side of the pan as illustrated by conduit 30'. Whether operating under gravity alone, or with a pump to provide additional suction, it will be apparent that a fluid-tight seal is necessary between the periphery of the header 11 and the peripheral step 22 of the pan 20. Such a seal is obtained by using any conventional means such as a suitable sealing gasket or sealing compound, typically a polyurethane or silicone resin, between the lower periphery of the header 11 and the step 22. As illustrated in Fig 2, permeate drains downward, but it could also be withdrawn from upper permeate port 45u in the upper permeate pan 43u (see Fig 9).

Referring to Figs 9 and 2A, six rows of fibers 12 are shown on either side of a gas distribution line 52 which traverses the length of the rows along the base of the fibers. The potted terminal end portions 12b" open into permeate pan 43b. Because portions 12u' and 12b' of individual fibers 12 are potted, and the fibers 12 are preferably from 1% to 2% longer than the fixed distance between upper and lower headers 41u and 41b, the fibers between opposed headers are generally parallel to one another, but are particularly parallel near each header. Also held parallel are the terminal end portions 12u" and 12b" of the fibers which protrude from the headers with their open ends exposed. The fibers protrude below the lower face of the bottom header 41b, and above the upper face of the upper header 41u. The choice of fiber spacing in the header will determine packing density of the fibers near the headers, but fiber spacing is not a substantial consideration because spacing does not substantially affect flux during operation.

Since the length of fibers tends to change while in service, the extent of the change depending upon the particular composition of the fibers, and the spacing between the upper and lower headers is critical, it is desirable to mount the headers so that one is adjustable in the vertical direction relative to the other, as indicated by the arrow V. This is conveniently done by attaching the pan 43u to a plate 19 having vertically spaced apart through-passages 34 through which a threaded stud 35 is inserted and secured with a nut 36. Threaded stud 35 is in a fixed mounting block 37.

The density of fibers in a header is preferably chosen to provide the maximum membrane surface area per unit volume of substrate without adversely affecting the circulation of substrate through the skein. A gas-distribution means 52 such as a perforated air-tube, provides air within the skein so that bubbles of gas (air) rise upwards while clinging to the outer surfaces of the fibers, thus efficiently scrubbing them. If desired, additional air-tubes 52' may be placed on either side of the skein near the lower header 41b, as illustrated in phantom outline, to provide additional air-scrubbing power. Whether the permeate is withdrawn from the upper header through port 45u or the lower header through port 45b, or both, depends upon the particular application, but in all instances, the fibers have a substantially vertical orientation.

The vertical skein is deployed in a substrate to present a generally vertical profile, but has no structural shape. Such shape as it does have changes continuously, the degree of change depending upon the flexibility of the fibers, their lengths, the overall dimensions of the skein, and the degree of movement imparted to the fibers by the substrate and also by the oxygen-containing gas from the gas-distribution means.

Referring to Fig 10 there is illustrated a typical assembly referred to as a "wall-mounted bank" which includes at least two side-by-side skeins, indicated generally by reference minerals 40 and 40' with their fibers 42 and 42'; fibers 42 are potted in upper and lower headers 41u and 41b respectively; and fibers 42' in headers 41n' and 41b'; headers 41u and 41b are fitted with permeate collecting means 46u and 46b respectively; headers 41n' and 41b' are fitted with permeate collecting means 46u' and 46b' respectively; and, the skeins share a common gas-distribution means 50. A "bank" of skeins is typically used to retrofit a large, deep tank from which permeate is to be withdrawn using a vacumm pump. In a large reservoir, several banks of skeins may be used in side-by-side relationship within a tank. Each skein includes multiple rows (only one row is shown) of fibers 42 and 42' in upper headers 41u and 41u', and lower headers 41b and 41b' respectively, and arms 51 and 51' of gas-distribution means 50 are disposed between the lower headers 41b and 41b', near their bases. The upper headers 41u and 41u' are mounted by one of their ends to a vertical interior surface of the wall W of a tank, with mounting brackets 53 and 53' and suitable fastening means such as bolts 54. The wall W thus functions as a spacer means which fixes the distance between the upper and lower headers. Each upper header is provided with a permeate collection pan 43u and 43u', respectively, connected to permeate withdrawal conduits 45u and 45u' and manifolded to permeate manifold 46u through which permeate being filtered into the collection pans is continuously withdrawn. Each header is sealingly bonded around its periphery, to the periphery of each collection pan.

The skein fibers (only one array of which is shown for clarity) shown in this perspective view have an elongated rectangular parallelpiped shape the sides of which are irregularly shaped when immersed in a substrate, because of the random side-to-side displacement of fibers as they sway. An elongated rectangular parallelpiped shape is preferred since it permits a dense packing of fibers, yet results in excellent scrubbing of the surfaces of the fibers with bubbles. With this shape, a skein may be formed with from 10 to 50 arrays of fibers across the longitudinal width 'w' of the headers 41u, 41b, and 41u', 41b' with each array having fibers extending along the transverse length 'l' of each header. Air-tubes on either side of a skein effectively cleanse the fibers if there are less than about 30 arrays between the air-tubes. A skein having more than 30 arrays is preferably also centrally aerated as illustrated by the air-tube 52 in Fig 9.

Thus, if there are about 100 fibers closely spaced-apart along the transverse length 'l' of an array, and there are 25 arrays in a skein in a header of longitudinal width 'w', then the opposed terminal end portions of 2500 fibers are potted in headers 41u and 41b. The open ends of all fibers in headers 41b and 41b' point downwards into collection zones in collection pans 43b and 43b' respectively, and those of all fibers in headers 41u and 41u' point upwards into collection zones in collection pans 43u and 43u' respectively. Withdrawal conduits 45u and 45u' are manifolded to permeate manifold 46u through which permeate collecting in the upper collection pans 43u and 43u' is typically continuously withdrawn. If the permeate flow is high enough, it may also be withdrawn from the collection pans 43b and 43b' through withdrawal conduits 45b and 45b' which are manifolded to permeate manifold 46b. When permeate is withdrawn in the same plane as the permeate withdrawal conduits 45u, 45u' and manifold 46u, and the transmembrane pressure differential of the fibers is in the range from 35 - 75 kPa (5 - 10 psi), manifold 46u may be connected to the suction side of a centrifugal pump which will provide adequate NPSH (net positive suction head).

In general, the permeate is withdrawn from both the upper and lower headers, until the flux declines to so low a level as to require that the fibers be backwashed. The skeins may be backwashed by introducing a backwashing fluid through the upper permeate collection manifold 46u, and removing the fluid through the lower manifold 46b. Typically, from 3 to 30 skeins may be coupled together for internal fluid communication with one and another through the headers, permeate withdrawal means and the fibers; and, for external fluid communication with one another through an air manifold. Since the permeate withdrawal means is also used for backflushing it is generally referred to as a 'liquid circulation means', and as a permeate withdrawal means only when it is used to withdraw permeate.

When deployed in a substrate containing suspended and dissolved organic and inorganic matter, most fibers of organic polymers remain buoyant in a vertical position. The fibers in the skein are floatingly buoyed in the substrate with the ends of the fibers anchored in the headers. This is because (i) the permeate is essentially pure water which has a specific gravity less than that of the substrate, and most polymers from which the fibers are formed also have a specific gravity less than 1, and, (ii) the fibers are buoyed by bubbles which contact them. Fibers made from ceramic, or, glass fibers are heavier than water.

Adjacent the skeins, an air-distribution manifold 50 is disposed below the base of the bundle of fibers, preferably below the horizontal plane through the horizontal center-lines of the headers. The manifold 50 is preferably split into two foraminous arms 51 and 51' adjacent the bases of headers 41b and 41b' respectively, so that when air is discharged through holes in each portion 51 and 51', columns of bubbles rise adjacent the ends of the fibers and thereafter flow along the fibers through the skeins. If desired, additional portions (not shown) may be used adjacent the bases of the lower headers but located on the outside of each, so as to provide additional columns of air along the outer surfaces of the fibers.

The type of gas (air) manifold is not narrowly critical provided it delivers bubbles in a preferred size range from about 1 mm to 25 mm, measured within a distance of from 1 cm to 50 cm from the through-passages generating them. If desired, each portion 51 and 51' may be embedded in the upper surface of each header, and the fibers potted around them, making sure the air-passages in the portions 51 and 51' are not plugged with potting compound. If desired, additional arms of air-tubes may be disposed on each side of each lower header, so that fibers from each header are scrubbed by columns of air rising from either transverse side.

The air may be provided continuously or intermittently, better results generally being obtained with continuous air flow. The amount of air provided depends upon the type of substrate, the requirements of the type of microorganisms, if any, and the susceptibility of the surfaces of the fibers to be plugged.

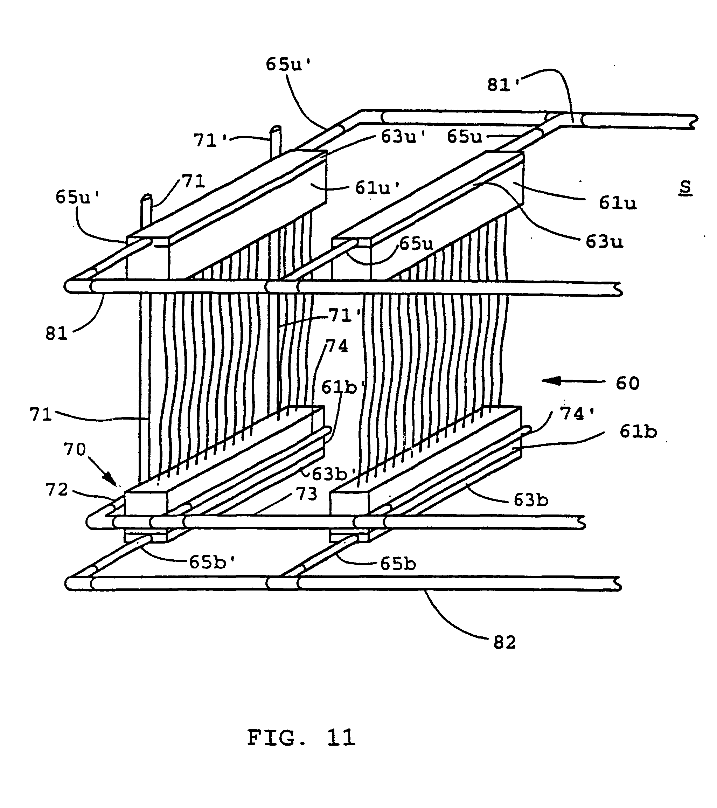

Referring to Fig 11, there is schematically illustrated another embodiment of an assembly, referred to as a "stand-alone bank" of skeins, two of which are referenced by numeral 60. The bank is referred to as being a "stand-alone" because the spacer means between headers is supplied with the skeins, usually because mounting the skeins against the wall of a reservoir is less effective than placing the bank in spaced-apart relationship from a wall. In other respects, the bank 60 is analogous to the wall-mounted bank illustrated in Fig 10.

Each bank 60 with fibers 62 (only a single row of the multiple, regularly spaced apart generally vertical arrays is shown for the sake of clarity) is deployed between upper and lower headers 61u and 61b in a substrate 'S'. The lower headers rest on the floor of the reservoir. The upper headers are secured to rigid vertical air tubes 71 and 71' through which air is introduced into a tubular air manifold identified generally by reference numeral 70. The manifold 70 cludes (i) the vertical tubular arms 71 and 71'; (ii) a lower transverse arm 72 which is perforated along the length of the lower header 61b' and secured thereto; the arm 72 communicates with longitudinal tubular arm 73, and optionally another longitudinal arm 73' (not shown) in mirror-image relationship with arm 73 on the far side of the headers; and (iii) transverse arms 74 and 74' in open communication with 72 and 73; arms 74 and 74' are perforated along the visible transverse faces of the headers 61b an 61b', and 74 and 74' may communicate with tubular arm 73' if it is provided. The vertical air-tubes 71 and 71' conveniently provide the additional function of a spacer means between the first upper header and the first lower header, and because the remaining headers in the bank are also similarly (not shown) interconnected by rigid conduits, the headers are maintained in vertically and transversely spaced-apart relationship. Since all arms of the air manifold are in open communication with the air supply, it is evident that uniform distribution of air is facilitated.

As before, headers 61u and 61u' are each secured in fluid-tight relationship with collection zones in collection pans 63u and 63u' respectively, and each pan has withdrawal conduits 65u and 65u' which are manifolded to longitudinal liquid conduits 81 and 81'. Analogously, headers 61b and 61b' are each secured in fluid-tight relationship with collection zones in collection pans 63b and 63b' respectively, and each pan has withdrawal conduits 65b and 65b' which are manifolded to longitudinal conduits 82 and 82' (not shown). As illustrated, withdrawal conduits are shown for both the upper and the lower headers, and both fore and aft the headers. In many instances, permeate is withdrawn from only an upper manifold which is provided on only one side of the upper headers. A lower manifold is provided for backwashing. Backwashing fluid is typically flowed through the upper manifold, through the fibers and into the lower manifold. The additional manifolds on the aft ends of the upper and lower headers not only provides more uniform distribution of backwashing fluid but support for the interconnected headers. It will be evident that, absent the aft interconnecting upper conduit 81', an upper header such as 61n will require to be spaced from its lower header by some other interconnection to header 61u' or by a spacer strut between headers 61u and 61b.

In the best mode illustrated, each upper header is provided with rigid PVC tubular nipples adapted to be coupled with fittings such as ells and tees to the upper conduits 81 and 81' respectively. Analogously, each lower header is connected to lower conduits 82 and 82' (not shown) and/or spacer struts are provided to provide additional rigidity, depending upon the number of headers to be interconnected. Permeate is withdrawn through an upper conduit, and all piping connections, including the air connection, are made above the liquid level in the reservoir.

The length of fibers (between headers) in a skein is generally chosen to obtain efficient use of an economical amount of air, so as to maintain optimum flux over a long period of time. Other considerations include the depth of the tank in which the bank is to be deployed, the positioning of the liquid and air manifolds, and the convection patterns within the tank, inter alia.

Figs 14 - 17 specifically illustrate preferred embodiments of the cylindrical vertical skein. Referring to Fig 14 there is schematically illustrated, in cross-sectional elevational view a vertical cylindrical skein 210 resting on the floor F of a tank, the skein comprising a pair of similar upper and lower cylindrical end-caps 221 and 222 respectively, which serve as permeate collection pans. Bores 226 and 227 in the upper and lower end-caps have permeate withdrawal tubes 231 and 232, respectively, connected in fluid-tight engagement therein. Permeate withdrawn through the tubes is combined in a permeate withdrawal manifold 230. Each end-cap has a finished upper/lower header formed directly in it, upper header 223 being substantially identical to lower header 224. Each header is formed by potting fibers 212 in a potting resin such as a polyurethane or an epoxy of sufficient stiffness to hold and seal the fibers under the conditions of use. A commercially available end-cap for poly(vinyl chloride) "PVC" pipe is most preferred; for large surface area skeins, larger headers are provided by commercially available glass fiber reinforced end-caps for cylindrical tanks. It is essential that the fibers are not in contact with each other, but spaced apart by cured resin. It is also essential that the cured resin adhere to and seal the lower portions 212' of each of the fibers against leakage of fluid under operating conditions of the skein. Visual confirmation of a seal is afforded by the peripheries of the fibers being sealed at the upper (fore) and lower (aft) faces 223u and 223b respectively of the upper header 223, and the fore and aft faces 224u and 224b respectively of the lower header 224. A conventional finished header may be used in which the ends 212" of the fibers would be flush (in substantially the same plane) as the lower face 224b. In the best mode, though not visible through an opaque end-cap, the open ends 212" of the fibers protrude from the headers' lower (aft or bottom) face 224b.

The finished upper header 223 (fixing lamina) is left adhered to the periphery of the end-cap 221 when the fugitive lamina is removed through bore 226 in the upper header; and analogously, the finished lower header 224 is left adhered to the periphery of the end-cap 222 when the fugitive lamina is removed through a bore 227.

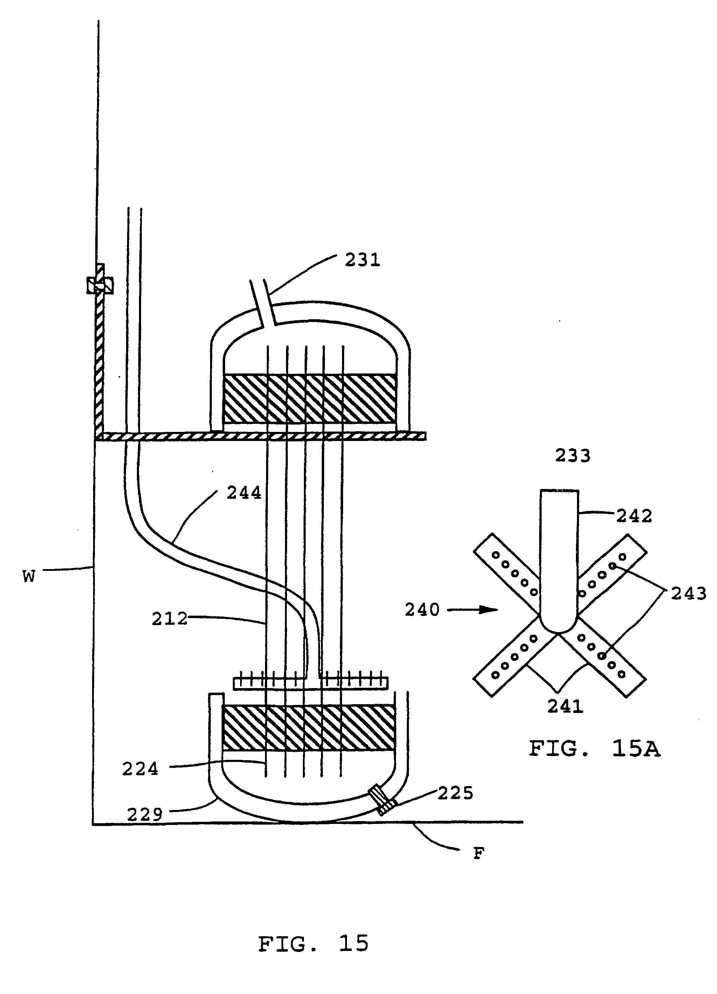

Skein fibers 212 are preferably in arrays bundled in a geometric configuration such as a spiral roll. A header is formed in a manner analogous to that described in relation to Fig 4, by potting the lower end of the spiral roll. Fig 14A, showing a bottom plan view of the aft face 224b of header 224, illustrates the spiral pattern of openings in the ends 212" of the fibers. It is preferred, before an array is rolled into a spiral, to place a sparger 240 (shown in Fig 15A) with a rigid air-supply tube 242 in the array so that upon forming a spiral roll the air-supply tube is centrally axially held within the roll.

Illustrated in Fig 14B is a bottom plan view of aft face 224b with another configuration, wherein a series of successively larger diameter circular arrays are formed, each a small predetermined amount larger than the preceding one, and the arrays secured, preferably adhesively, one to the next, near their upper and lower peripheries respectively to form a dense cylindrical mass of fibers. In such a mass of fibers, referred to as a series of annular rings, each array is secured both to a contiguous array having a next smaller diameter, as well as to a contiguous array having a next larger diameter, except for the innermost and outermost arrays which have the smallest and largest diameters, respectively. The pattern in header 224 illustrates the ends 212" of the fibers after the nested arrays are potted.

Illustrated in Fig 14C is a bottom plan view of lower (aft) face 224b with plural arrays arranged chord-like within the header 224. Arrays are formed on pairs of strips, each having a length corresponding to its position as a chord within a potting ring in which the skein fibers are to be potted. That is, each array is formed on strips of diminishing width, measured from the central array which is formed on a strip having a width slightly less than the inner diameter of the potting ring in which the stack is to be potted. The arrays are stacked within the ring, the widest array corresponding in position to the diameter of the ring. For a chosen fiber 212, the larger the surface area required in a skein, the greater the number of fibers in each array, the bigger the diameter of the ring, and the wider each chord-like array. The plural arrays are preferably adhered one to the other by coating the surfaces of fibers with adhesive prior to placing a strip of the successive array on the fibers. Alternatively, the bundled arrays may be held with a rubber band before being inserted in the potting ring. The resulting chord-like pattern in header 224 illustrates the ends 212" of the fibers after the nested arrays are potted.

A detail of a sparger 240 is provided in Fig 15A. The star-shaped sparger 240 having radially outwardly extending tubular arms 241 and a central supply stub 242, supplies air which is directed into the tubular arms and discharged into the substrate through air passages 243 in the walls of the arms. An air feed tube 244 connected to the central supply stnb 242 provides air to the sparger 240. The lower end of the central stub 242 is provided with short projecting nipples 245 the inner ends of which are brazed to the stub. The outer ends of the nipples are threaded. The central stub and nipples are easy to insert into the center of the mass of skein fibers. When centrally positioned, arms 241 which are threaded at one end, are threadedly secured to the outer ends of the nipples.

As illustrated in Fig 14, lower end-cap 222 rests on the floor F of a tank, near a vertical wall W to which is secured a vertical mounting strut 252 with appropriate fastening means such as a nut 253 and bolt 254. A U-shaped bracket 251 extends laterally from the base of the mounting strut 252. The arms of the U-shaped bracket support the periphery of upper end-cap 221, and to ensure that the end-cap stays in position, it is secured to the U-shaped bracket with a right angle bracket and fastening means (not shown). A slot in mounting strut 252 permits the U-shaped bracket to be raised or lowered so that the desired distance between the opposed faces 223b and 224u of the upper and lower headers respectively is less than the length of any potted fiber, measured between those faces, by a desired amount. Adjustability is particularly desirable if the length of the fibers tends to change during service.

As illustrated in Fig 14, if it is desirable to withdraw permeate from only the upper tube 231, a permeate connector tube 233 (shown in phantom outline), is inserted within the mass of skein fibers 212 through the headers 223 and 224, connecting the permeate collection zone 229 in the lower end-cap in open fluid communication with the permeate collection zone 228 in the upper end-cap; and, bore 227 is plugged with a plug 225 as shown in Fig 15. Since, under such circumstances, it does not matter if the lower ends 212" of the fibers are plugged, and permeate collection zone 229 serves no essential function, the zone 229 may be filled with potting resin.

Referring to Fig 16 there is illustrated a skein 270 with upper and lower end-caps 271, 272 in which are sealed upper and lower ring headers formed in upper and lower rings 220u and 220b respectively, after the fibers in the skein are tested to determine if any is defective. A rigid air-supply tube 245 is positioned in the spiral roll as described above, and the lower end of the roll is potted forming a lower finished header 274 in which the lower end 246 of the air-supply tube is potted, fixing the position of the arms 241 and air passages 243 of the sparger just above the upper face 274u of the header 274.

In an analogous manner, an upper header 273 is formed in ring 220u and upper end 247 of air-supply tube 245 is inserted through an axial bore 248 within upper end-cap 271 which is slipped over the ring 220u the outer periphery of which is coated with a suitable adhesive, to seal the ring 220u in the end-cap 271. The periphery of the upper end 247 is sealed in the end cap 271 with any conventional sealing compound.

Referring to Fig 17 there is schematically illustrated another embodiment of a skein 280 in which rigid permeate tube 285 is held concentrically within a rigid air-supply tube 286 which is potted axially within skein fibers 212 held between opposed upper and lower headers 283 and 284 in upper and lower rings 220u and 220b which are in turn sealed in end-caps 281 and 282 respectively. For ease of manufacture, the lower end 285b of permeate tube 285 is snugly fitted and sealed in a bushing 287. The bushing 287 and end 285b are then inserted in the lower end 286b of the air supply tube 286 and sealed in it so that the annular zone between the outer surface of permeate tube 285 and the inner surface of air supply tube 286 will duct air to the base of the fibers but not permit permeate to enter the annular zone. The air supply tube is then placed on an array and the array is rolled into a spiral which is held at each end with rubber bands. The lower end of the roll is placed in a ring 220b and a lower ring header is formed with a finished header 284 as described above. It is preferred to use a relatively stiff elastomer having a hardness in the range from 50 Shore A to about 20 Shore D, and most preferred to use a polyurethane having a hardness in the range from 50 Shore A to about 20 Shore D, measured as set forth in ASTM D-790, such as PTU-921 available from Canadian Poly-Tech Systems. To form the upper finished header 283 the air supply tube is snugly inserted through an O-ring held in a central bore in a plate such as used in Fig 5, to avoid loss of potting resin from the ring, and the fugitive resin and finishing resins poured and cured, first one then the other, in the ring. Lower finished header 284 is formed with intermediate portions 212b' embedded, and terminal portions 212b" protruding from the header's aft face. Upper finished header 283 is formed with intermediate portions 212u' embedded, and terminal portion 212u" protruding from the header's fore face. After the finished headers 283 and 284 are formed and the fibers checked for defects, the upper end 286u of the air supply tube 286 is inserted through a central bore 288 in upper end-cap 281 and sealed within the bore with sealing compound or a collar 289. Preferably the permeate tube 285, the air supply tube 286 and the collar 289 are all made of PVC so that they are easily cemented together to make leak-proof connections.

As shown, permeate may be withdrawn through the permeate tube 285 from the permeate collection zone in the lower end-cap 282, and separately from the upper end-cap 281 through permeate withdrawal port 281p which may be threaded for attaching a pipe fitting. Alternatively, the permeate port 281p may be plugged and permeate withdrawn from both end-caps through the permeate tube 285.

Upper end 285u of permeate tube 285 and upper end 286u of air supply tube 286 are inserted through a T-fitting 201 through which air is supplied to the air supply tube 286. The lower end 201b of one of the arms of the T 201 is slip-fitted and sealed around the air supply tube. The upper end 201u of the other arm is inserted in a reducing bushing 202 and sealed around the permeate tube. Air supplied to intake 203 of the T 201 travels down the annular zone between the permeate tube and the air supply tube and exits through opposed ports 204 in the lower portion of the air supply tube, just above the upper face 284u of the lower header 284. It is preferred to thread ports 204 to threadedly secure the ends of arms 241 to form a sparger which distributes air substantially uniformly across and above the surface 284u. Additional ports may be provided along the length of the vertical air supply tube, if desired.

In another embodiment of the invention, a bioreactor is retrofitted with plural banks of skeins schematically illustrated in the elevational view shown in Fig 12, and the plan view shown in Fig 13. The clarifier tank is a large circular tank 90 provided with a vertical, circular outer baffle 91, a vertical circular inner baffle 92, and a bottom 93 which slopes towards the center (apex) for drainage of accumulating sludge. Alternatively, the baffles may be individual, closely spaced rectangular plates arranged in outer and inner circles, but continuous cylindrical baffles (shown) are preferred. Irrespective of which baffles are used, the baffles are located so that their bottom peripheries are located at a chosen vertical distance above the bottom. Feed is introduced through feed line 94 in the bottom of the tank 90 until the level of the substrate rises above the outer baffle 91.

A bank 60 of plural skeins 10, analogous to those in the bank depicted in Fig 10, each of which skeins is illustrated in Fig 9, is deployed against the periphery of the inner wall of the bioreactor with suitable mounting means in an outer annular permeate extraction zone 95' (Fig 13) formed between the circular outer baffle 91 and the wall of the tank 90, at a depth sufficient to submerge the fibers. A clarification zone 91' is defined between the outer circular baffle 91 and inner circular baffle 92. The inner circular baffle 92 provides a vertical axial passage 92' through which substrate is fed into the tank 90. The skeins form a dense curtain of fibers in radially extending, generally planar vertical arrays as illustrated in Fig 9, potted between upper and lower headers 41u and 41b. Permeate is withdrawn through manifold 46u and air is introduced through air-manifold 80, extending along the inner wall of the tank, and branching out with air-distribution arms between adjacent headers, including outer distribution arms 84' on either side of each lower header 41b at each end of the bank. The air manifold 80 is positioned between skeins in the permeate extraction zone 95' in such a manner as to have bubbles contact essentially the entire surface of each fiber which is continuously awash with bubbles. Because the fibers are gen erally vertical, the air is in contact with the surfaces of the fibers longer than if they were arcuate, and the air is used most effectively to maintain a high flux for a longer period of time than would otherwise be maintained.

It will be evident that if the tank is at ground level, there will be insufficient liquid head to induce a desirable liquid head under gravity alone. Without an adequate siphoning effect, a centrifugal pump may be used to produce the necessary suction. Such a pump should be capable of running dry for a short period, and of maintaining a vacuum on the suction side of from 25.5 cm (10") - 51 cm (20") of Hg, or -35 kPa (-5 psi) to -70 kPa (-10 psi). Examples of such pumps rated at 18.9 L/min (5 gpm) @ 15" Hg, are (i) flexible-impeller centrifugal pumps, e.g. Jabsco® #30510-2003; (ii) air operated diaphragm pumps, e.g. Wilden® M2; (iii) progressing cavity pumps, e.g. Ramoy® 3561; and (iv) hosepumps, e.g. Waukesha® SP 25.

### Example 1

Microfiltration of an activated sludge at 30°C having a concentration of 25 g/L total suspended solids (2.5% TSS) is carried out with a skein of polysulfone fibers in a pilot plant tank. The fibers are "air scrubbed" at a flow rate of 12 CFM (0.34 m³/min) with an incorporated coarse bubble diffuser generating bubbles in the range from about 5 mm to 25 mm in nominal diameter. The air is sufficient not only for adequate scrubbing butalso for the oxidation requirements of the biomass. The fibers have an o.d. of 1.7 mm, a wall thickness of about 0.5 mm, and a surface porosity in the range from about 20% to 40% with pores about 0.2µm in diameter. The skein which has 1440 fibers with a surface area of 12 m² is wall-mounted in the tank, the vertical spaced apart distance of the headers being about 1% less than the length of a fiber in the skein, providing slackness. The opposed ends of the fibers are potted in upper and lower headers respectively, each about 41 cm long and 10 cm wide. The fixing material of the headers is an epoxy having a hardness of about 70 Shore D with additional upper an lower laminae of softer polyurethane (about 60 Shore A and 30 Shore D respectively) above and below the epoxy lamina, and the fibers are potted to a depth sufficient to have their open ends protrude from the bottom of the header. The average transmembrane pressure differential is about 34.5 kPa (5 psi). Permeate is withdrawn through lines connected to the collection pan of each header with a pump generating about 34.5 kPa (5 psi) suction. Permeate is withdrawn at a permeability of about 0.7 Lm²h/kPa yielding about 4.8 L/min of permeate which has an average turbidity of < 0.8 NTU, which is a turbidity not discernible to the naked eye.

### Example 2

### Comparison of Operation of a Vertical Skein (ZW 72) in Different Orientations

In the following comparison, three pairs of identical skeins with equally slack fibers are variously positioned (as designated) above aerators in a bioreactor. Each pair is subjected to the same discharge of air through identical aerators. Rectangular but not square headers are chosen to determine whether there is a difference between each of two flat horizontal orientations, which difference would not exist in a horizontal skein with cylindrical headers. A pair of identical rectangular skeins, each having headers 41.66 cm (16.4 in) in length (x-axis), 10.16 cm (4 in) in width (y-axis) and 7.62 cm (3 in) in height (z-axis), in which are potted 1296 Zenon® MF200 microfiltration fibers presenting a nominal fiber surface area of 6.25 m², were tested in three different orientations in a bioreactor treating domestic wastewaters. The fibers used are the same as those used in Example 1 above. The distance between opposed faces of headers is 90 cm (35.4 in) which is about 2% less than the length of each fiber potted in those headers.

In a first test, the two (first and second) skeins were stacked laterally, each in the same direction along the longitudinal axis, with a 2.5 cm (1 in) thick spacer between the headers, the headers of each skein being in a horizontal flat orientation (area 41.66 cm x 7.62 cm) is spaced apart 7.62 cm (3 in) above the floor on which lies the aerators in the form of three side-by-side linear tubes with 3 mm (0.125") openings. The first skein which is directly above the aerators is therefore referred to as the "lower skein".

In a second test, the same first and second skeins are each rotated 90° about the longitudinal x-axis and placed contiguously one beside the other. In this "horizontal 90°" orientation (area defined by 10.16 cm X 7.62 cm) is spaced apart from the aerators as in the prior test.

In a third test, the first and second skeins are placed side-by-side in vertical orientations as shown in Fig 9 except there is no internal aerator.

Each test provides the fibers in each orientation with the identical amount of air. Permeate was withdrawn with a pump with a NPSH of 0.3 bar (10" of Hg). The conditions were held constant until it was observed that the flux obtained for each test was substantially constant, this being the equilibrium value. After this occurred, each skein was back pulsed for 30 sec with permeate every 5 minutes to maintain the flux at the equilibrium value.
The test conditions for each of the above three runs were as follows:

| | |
|---|---|
| TSS in bioreactor 8 g/L; | Temperature of biomass 19°C |
| Flow rate of air 0.2124 m³/min/skein; | Suction on fibers 25.4 cm of Hg |

Fig 18 is a bar graph which shows the average flux over a 24 hr period for each orientation of the skein as follows:

| | |
|---|---|
| Orientation | Average flux L/m²/hr over 24 hr |
| Horizontal flat | 21.2 LMH |
| Horizontal 90° | 17.8 LMH |
| Vertical | 27.7 LMH |

This conclusively demonstrates that the vertical orientation of the skein fibers produces the highest overall flux.

### Example 3

### Comparison of Positions of Aerator Inside and Outside the Skein Fibers:

In this test the difference in flux is measured in a bioreactor treating wastewater contaminated with ethylene glycol, the difference depending upon how a single cylindrical vertical skein (ZW 172) having a nominal surface area of 16 m² is aerated with 3.5 L/min (7.5 scfm). The skein is formed as shown in Fig 16 around a central PVC pipe having an o.d. of 7.5 cm, the fibers being disposed in an annular zone around the central support, the radial width of the annular zone being about 7.5 cm, so that the o.d. of the skein is about 11.25 cm.

In a first test, air is introduced within the skein; in a second test, air is introduced around the periphery of the skein. After equilibrium is reached, operation is typically continued by back pulsing the skein with permeate at chosen intervals of time, the interval depending upon how quickly the fibers foul sufficiently to decrease the flux substantially.

The process conditions, which were held constant over the period of the test, were as follows:

| | | | |
|---|---|---|---|
| TSS | 17g/L; | Temperature of biomass | 10.5°C |
| Flow rate of air | 0.2124 m³/min; | Suction on fibers | 25.4 cm of Hg |

**For external aeration:** A perforated flexible tube with holes about 3 mm in diameter spaced about 2.5 cm apart was wrapped around the base of the ZW 72 skein and oriented so that air is discharged in a horizontal plane, so that bubbles enter laterally into the skein, between fibers. Thereafter the bubbles rise vertically through the skein fibers. Lateral discharge helps keep the holes from plugging prematurely.
**For internal aeration:** The central tubular support was used as the central air distribution manifold to duct air into five 4" lengths of 1/4" pipe with 1/8" holes at 1" intervals, plugged at one end, in open flow communication with the central pipe, forming a spoke-like sparger within the skein, at the base. The number of holes is about the same as the number in the external aerator, and the flow rate of air is the same. As before the holes discharge the air laterally within the skein, and the air bubbles rise vertically within the skein, and exit the skein below the upper header.

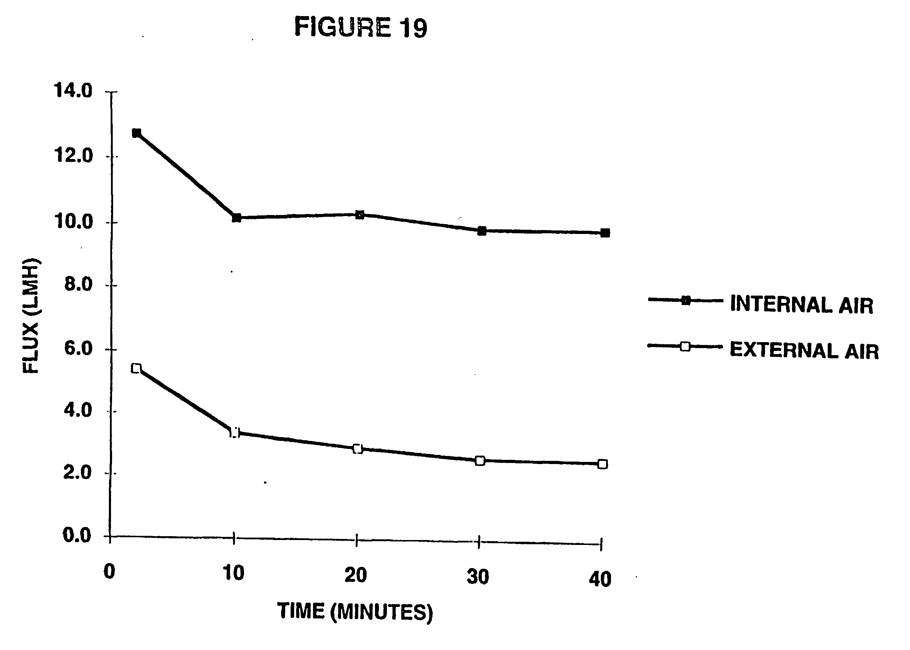

Fig 19 is a plot of flux as a function of time, until the flux reaches an equilibrium value. Thereafter the flux may be maintained by back pulsing at regular intervals. As is evident, the equilibrium flux with external aeration is about 2.6 LMH, while the flux with internal aeration is about 9.9 LMH which is nearly a four-fold improvement. From the foregoing it will be evident that, since it is well-known that flux is a function of the flow rate of air, all other conditions being the same during normal operation, a higher flux is obtained with internal aeration with the same flow of air.

### Example 4

### Comparison of skeins in which one has swayable fibers, the other does not:

The slackness in the fibers is adjusted by decreasing the distance between headers. Essentially no slack is present (fibers are taut) when the headers are spaced at a distance which is the same as the length of a fiber between its opposed potted ends. A single ZW 72 skein is used having a nominal surface area of 6.7 m² is used in each test, in a bioreactor to treat wastewater contaminated with ethylene glycoL Aeration is provided as shown in Fig 9 (no internal aeration) with lateral discharge of air bubbles into the skein fibers through which bubbles rose to the top.

In the first test the headers are vertically spaced apart so that the fibers are taut and could not sway.

In the second test, the headers were brought closer by 2 cm causing a 2.5% slackness in each fiber, permitting the slack fibers to sway.

As before the process conditions, which were held constant over the period of the test, were as follows:

| | | | |
|---|---|---|---|
| Suspended solids | 17 g/L | Temperature of biomass | 10.5°C |
| Flow rate of air | 0.2124 m³/min; | Suction on fibers | 25.4 cm of Hg |

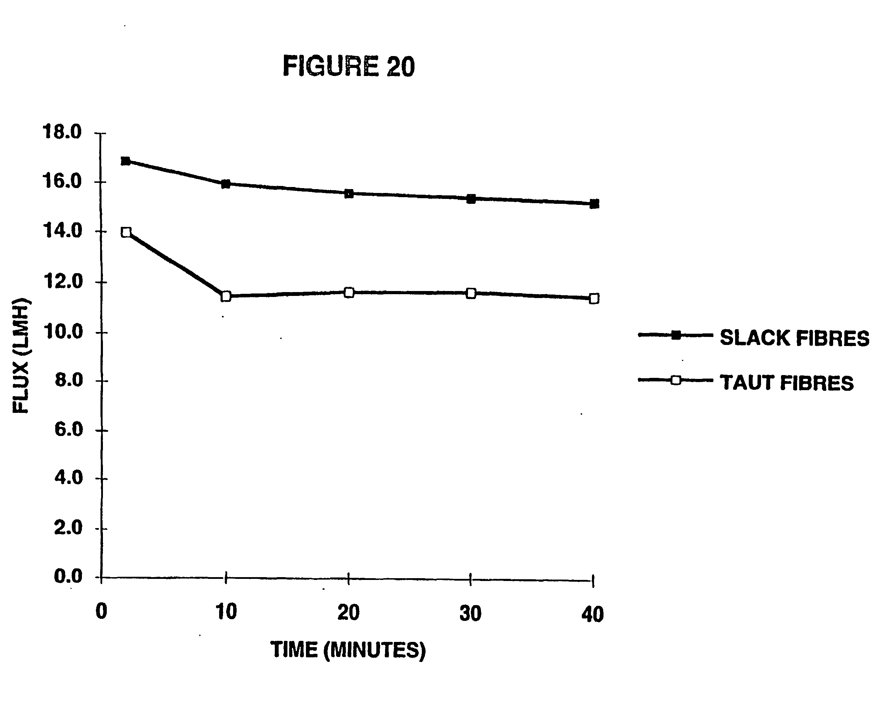

Fig 20 is a plot of flux as a function of time, until the flux reaches an equilibrium value. Thereafter the flux may be maintained by back pulsing at regular intervals as before in example 3. As is evident, the equilibrium flux with no swayability is about 11.5 LMH, while the flux with 2.5% slack is about 15.2 LMH, which is about a 30% improvement.

### Example 5

### Filtration of water with a vertical cylindrical skein to obtain clarity:

A cylindrical skein is constructed as in Fig 16 with Zenon® MF200 fibers 180 cm long, which provide a surface area of 25 m² in cylindrical headers having a diameter of 28 cm held in end-caps having an o.d. of 30 cm. Aeration is provided with a spider having perforated cross-arms with 3 mm (0.125") dia. openings which discharge about 10 liter/min (20 scfm, standard ft³/min) of air. This skein is used in four typical applications, the results of which are provided below. In each case, permeate is withdrawn with a centrifugal pump having a NPSH of about 0.3 bar (10" Hg), and after equilibrium is reached, the skein is backflushed for 30 sec with permeate every 30 min.
A, Filtration of Surface (Pond) Water having 10 mg/L TSS:
   Result - permeate having 0.0 mg/L TSS is withdrawn at a rate of 2000 liters/hr (LPH) with a turbidity of 0.1 NTU. A "5 log" reduction (reduction of original concentration by five orders of magnitude) of bacteria, algae, giardia and cryptosporidium may be obtained, thus providing potable water.
B. Filtration of Raw Sewage with 100 mg/L TSS:
   Result - permeate having 0.0 mg/L suspended solids is withdrawn at a rate of 1000 LPH (liters/hr) with a turbidity of 0.2 NTU. Plural such skeins may be used in a bank in the full scale treatment of industrial wastewater.
C. Filtration of a mineral suspension containing 1000 mg/L TSS of iron oxide particles:
   Result - permeate having 0.0 mg/L suspended solids is withdrawn at a rate of 3000 LPH (liters/hr) with a turbidity of 0.1 NTU. High flux is maintained with industrial wastewater containing mineral particles.
D. Filtration of fermentation broth with 10,000 mg/L bacterial cells:
   Result - permeate having 0.0 mg/L suspended solids is withdrawn at a rate of 1000 LPH (liters/hr) with a turbidity of 0.1 NTU. The broth with a high biomass concentration is filtered non-destructively to yield the desired permeate, as well as to save living cells for reuse.

### Example 6

### Special Purpose Mini-Skein:

The following examples illustrate the use of a mini-skein for typical specific uses such as filtration of (i) raw sewage to obtain solids-free water samples for colorimetric analyses, (ii) surface water for use in a recreational vehicle ("camper") or motor home, or (iii) water from a small aquarium for fish or other marine animals.

A cylindrical mini-skein is constructed as shown in Fig 16, with cylindrical headers having an o.d. of 5 cm (2") and a thickness of 2 cm (0.75") with 30 fibers, each 60 cm long to provide a surface area of 0.1 m². The skein is mounted on a base on which is also removably disposed a blower to discharge 15 L/min of air at 12 kPa (3 psig) through a sparger which has 1.6 mm (0.0625") openings, the air flowing through the skein upwards along the fibers. Also removably mounted on the base is a peristaltic pump which produces a vacuum of 0.3 bar (10" Hg). In each application, the self-contained skein with integral permeate pump and gas-discharge means, is placed, for operation, in a cylindrical container of the substrate to be filtered.

The results with each application (A) - (D) are listed below:
(i) Raw sewage contains 100 mg/L TSS; permeate containing 0.0 mg/L TSS having a turbidity of 0.2 NTU, is withdrawn at 0.1 LPH.
(ii) Aquarium water withdrawn contains 20 mg/L TSS, including algae, bacteria, fungus and fecal dendritus; permeate containing 0.0 mg/L TSS having a turbidity of 0.2 NTU, is withdrawn at 0.1 LPH.
(iii) Pond water withdrawn contains 10 mg/L TSS; permeate containing 0.0 mg/L TSS having a turbidity of 0.2 NTU, is withdrawn at 0.1 LPH.

### GLOSSARY

The following glossary is provided for terms in the approximate order in which they are used in the specification to define their meaning in the context in which they are used.

"array" - plural, essentially vertical fibers of substantially equal lengths, the one ends of each of which fibers are closely spaced-apart, either linearly in the transverse (y-axis herein) direction to provide at least one row, and typically plural rows of equidistantly spaced apart fibers. Less preferably, a multiplicity of fibers may be spaced in a random pattern. The opposed ends of fibers are sealed in opposed headers so that substrate does not contaminate permeate in permeate collection means in which the headers are peripherally sealed.

"bundle" - plural elements held together, e.g. plural arrays which may be a stack of planar arrays, or arcuate or circular arrays, or a rolled spiral.

"bank" - used for brevity, to refer to a bank of skeins; in the bank, a row (or other configuration) of lower headers is directly beneath a row of upper headers.

"cylindrical skein" - a vertical skein in which the permeate collection means has a cylindrical configuration.

"dead end tank" - a tank or bioreactor from which no liquid other than the permeate is removed.

"fibers" - used for brevity to refer to hollow fiber membranes.

"flux" - unit flow (liters/hr), through a membrane of unit surface area (meter²), flux is given as Lm²h or LMH.

"fugitive material" - material which is either (i) soluble in a medium in which the fibers and fixing material are not soluble, or (ii) fluidizable by virtue of having a melting point (if the material is crystalline) below that which might damage the fibers or fixing material; or, the material has a glass transition temperature Tg (if the material is non-crystalline), below that which might damage the fibers or material(s) forming the non-fugitive header; or (iii) both soluble and fluidizable.

"header" - a solid body in which one of the terminal end portions of each one of a multiplicity of fibers in the skein, is sealingly secured to preclude substrate from contaminating the permeate in the lumens of the fibers. The body is of arbitrary dimensions formed from a natural or synthetic resinous material (thermoplastic or thermosetting).

"integral header" - combination of header and permeate collection means, in which combination the header is peripherally sealed in fluid-tight relationship with the permeate collection means.

"integral single skein" - a skein in an integral finished header is formed in the permeate pan or end-cap, sealing the header therein.

"mini-skein" - a self-contained gas-scrubbed assembly of a skein having a surface area less than about 5 m², in combination with an integrally packaged gas blower and permeate pump.

"multicomponent liquid feed" - fruit juices to be clarified or concentrated; wastewater or water containing particulate matter; proteinaceous liquid dairy products such as cheese whey, and the like.

"non-vacuum pump" - generates a net suction side pressure difference, or, net positive suction head (NPSH), adequate to provide the transmembrane pressure differential generated under the operating conditions; may be a centrifugal, rotary, crossflow, flow-through, or other type.

"permeability" - flux per unit pressure, Lm²h/kPa; sometimes referred to as specific flux.

"permeate collection means" - receptacle beneath a header in which receptacle permeate collects.

"ring header" - header having a cylindrical shape.

"rectangular skein" - a vertical skein in which the permeate collection means has a configuration of a rectangular parallelpiped.

"skein" - used for brevity to refer to either a cylindrical skein or a vertical skein, or both, having plural arrays potted in opposed headers, the fibers having a critically defined length relative to the vertical distance between headers of the skein. The defined length limits the side-to-side movement of the fibers in the substrate in which they are deployed, except near the headers where there is negligible movement.

"skein fibers" - fibers which make up the cylindrical skein

"vertical skein" - an integrated combination of structural elements including (i) a multiplicity of vertical fibers of substantially equal length; (ii) a pair of headers in each of which are potted the opposed terminal portions of the fibers so as to leave their ends open; and, (iii) permeate collection means held peripherally in fluid-tight engagement with each header so as to collect permeate from the ends of the fibers.

"substrate" - multicomponent liquid feed.

"particulate matter" - micron-sized (from 1 to about 44µm) and sub-micron sized (from about 0.1µm to 1µm) filtrable matter which includes not only particulate inorganic matter, but also dead and live biologically active microorganisms, colloidal dispersions, solutions of large organic molecules such as fulvic acid and humic acid, and oil emulsions.

"restrictedly swayable" - the extent to which fibers may sway in a zone of confinement, which extent is determined by the free length of the fibers relative to the fixedly spaced-apart headers, and the turbulence of the substrate.

"stack of arrays" - plural rows of arrays, which are densely packed to form, after they are potted, a skein.

"substantially concentrically" - describes a configuration in which in which individual fibers are either vertical and spaced apart along the circumference of a circle drawn about the central vertical axis, or, spirally disposed, successive layers of the fibers typically being closely spaced-apart in the x-y plane, not only radially outwards from the central axis, but also along the spiral in that plane so that they appear to be concentrically distributed at successively increasing radial distances from the central axis.

"transmembrane pressure differential" - pressure difference across a membrane wall, resulting from the process conditions under which the membrane is operating.

"unsupported" - not supported except for spacer means to space the headers.

"vacuum pump" - capable of generating a suction of at least 75 cm of Hg.

"zone of confinement" (or "bubble zone") - a zone through which bubbles rise along the outer surfaces of the fibers. The bubble zone, in turn, is determined by one or more columns of vertically rising gas bubbles generated near the base of a skein.

## Claims

1. An apparatus for withdrawing filtered permeate from a substrate at ambient pressure, comprising:
a header (274,284) having a first face and a second face;
a receptacle (222,282) for collecting permeate, the receptacle (222,282) being in fluid communication with the second face of the header (274,284) and having a permeate outlet (227,285) adapted to be connected to a source of suction;
a plurality of hollow fibre membranes (212), the hollow fibre membranes (212) sealingly secured in the header (274,284) and extending from the first face of the header (274,284), and having ends (212b',212b") open to the receptacle (222,282) for collecting permeate such that a portion of the substrate drawn into the lumens of the membranes (212) as permeate may flow into the receptacle (222,282); and,
a gas distribution means (240,241,243,245;204,286) adapted to be connected to a source of gas and adapted to discharge bubbles of the gas from near the first face of the header (214,284) from one or more apertures (204,243) located within the plurality of membranes (212),
**characterized in that**,
the gas distribution means includes a gas delivery tube (245,286) that is oriented generally vertically when the apparatus is in use, said gas delivery tube (245,286) protruding upwards from the first face of the header (274,284) from a location within the plurality of membranes (212) such that the membranes (212) surround the generally vertical gas delivery tube (245,286) where the membranes (212) extend from the header (274,284), said gas delivery tube (245,286) being arranged to deliver gas from the source of gas along and inside the generally vertical gas delivery tube for the gas to be discharged as bubbles via said aperture(s) (204,243).

2. The apparatus of claim 1 wherein the gas delivery tube (245,286) is located axially within a plurality of membranes (212) that surround the gas delivery tube (245, 286) and the gas distribution means is arranged to discharge bubbles only from a location within the plurality of membranes.

3. The apparatus of any preceding claim wherein the membranes (212) are generally parallel to each other and the gas delivery tube (245,286) is generally parallel to the membranes (212).

4. The apparatus of claim 1, 2 or 3 wherein bubbles, when discharged from the apertures (204,243), flow vertically upwards between and parallel to the membranes (212).

5. The apparatus of any preceding claim wherein the apertures (204) are located at various locations around the circumference of the gas delivery tube (286).

6. The apparatus of any preceding claim wherein the gas delivery tube (286) has apertures (204) for discharging bubbles at a plurality of locations along the length of the gas delivery tube (286).

7. The apparatus of any preceding claim wherein the apertures (243) are located in pipes (241) extending outwards from the gas delivery tube (245), said outwardly-extending pipes forming a sparger (240).

8. The apparatus of any preceding claim wherein the first face of the header (274,284) is circular and the gas delivery tube (245,286) protrudes from the center of the first face of the header (274, 284).

9. The apparatus of any preceding claim wherein the gas delivery tube (245,286) is secured in and at least partially extends through the header (274,284).

10. The apparatus of claim 9 wherein the gas delivery tube (286) extends fully through the header (284).

11. The apparatus of any preceding claim wherein the membranes (212) and gas delivery tube (245,286) protrude perpendicular to the first face.

12. The apparatus of any preceding claim wherein the gas delivery tube (286) has a fitting (201) to connect the tube (286) to a supply of gas.

13. The apparatus according to any preceding claim wherein the membranes (212) are made from braided yarn covered with a water-insoluble polymeric material.

14. The apparatus of any preceding claim where the membranes (212) are configured to sway when contacted by bubbles rising between them.

15. The apparatus of any preceding claim wherein the membranes are not confined in a shell of a module.

16. The apparatus of any preceding claim wherein the header (274, 284) has a cushioning lamina surrounding the membranes (212) where the membranes (212) extend from the header (274, 284).

17. The apparatus of any preceding claim wherein the membranes (212) extend between upper and lower headers and the length of the membranes (212) is not more than 5% greater than the distance between points where the membranes protrude from the upper and lower headers.

18. The apparatus of claim 17 wherein the length of the membranes (212) is between 0.1 % and 5% greater than the distance between points where the membranes (212) protrude from the upper and lower headers.

19. The apparatus of claim 17 wherein the length of the membranes (212) is between 0.1% and 1% in excess of the distance between points where the membranes (212) protrude from the upper and lower headers.

20. A system for withdrawing filtered permeate from a substrate at ambient pressure, comprising:
a reservoir (90) containing a substrate at ambient pressure;
an apparatus of any preceding claim immersed in the substrate such that the first face of the header (274,284) is generally horizontal and the gas delivery tube (245,286) protrudes generally vertically upwards from the first face of the header (274, 284);
a source of suction in fluid communication with the permeate outlet (227,285) and operable to apply sufficient suction to withdraw permeate from the lumens of the membranes (212); and,
an aeration system for supplying a pressurized gas to the gas distribution means whereby in use bubbles discharged from the apertures (204,243) flow vertically upwards between and parallel to the membranes (212).

21. The system of claim 20 having a backwashing system for backwashing the apparatus with a liquid.

22. The system of claim 21 wherein the liquid comprises permeate.

23. The system of any of claims 20 to 22 wherein the reservoir (90) contains a slow moving or captive substrate.

24. The system of any of claims 20 to 22 having a fitting (201) located above the substrate for connecting the gas distribution means to a source of pressurized gas.

25. The use of an apparatus according to any of claims 1 to 19 to filter permeate from a substrate at ambient pressure.

26. The use according to claim 25 wherein the membranes (212) extend along their entire length generally vertically, and bubbles discharged from said apertures (204,243) scrub the generally vertical membranes (212).

27. The use according to claim 25 or 26 wherein the membranes (212) sway when contacted by bubbles rising between them.

28. A process for withdrawing filtered permeate from a substrate comprising the steps of:
providing a reservoir (90) containing a substrate at ambient pressure; providing an apparatus according to any of the claims 1 to 19;
placing the apparatus in the substrate such that the first face of the header (274,284) is generally horizontal and the gas delivery tube (285,286) protrudes generally vertically upwards from the first face of the header (274,284);
applying suction to the permeate outlet (227,285) to withdraw permeate from the lumens of the membranes (212); and,
supplying a pressurized gas to gas distribution means whereby bubbles discharged from the apertures (204,243) flow vertically upwards between and parallel to the membranes (212).

29. The process of claim 28 wherein the membranes (212) sway when contacted by bubbles rising between them.

## Patentansprüche

1. Eine Vorrichtung zum Entnehmen von gefiltertem Permeat aus einem Substrat bei Umgebungsdruck, mit folgenden Merkmalen:
einem Kopfelement (274, 284) mit einer ersten Fläche und einer zweiten Fläche;
einem Behälter (222, 282) zum Auffangen von Permeat, wobei der Behälter (222, 282) in Fluidkommunikation mit der zweiten Fläche des Kopfelements (274, 284) steht und einen Permeatauslass (227, 285) aufweist, der angepasst ist, um mit einer Saugquelle verbunden zu sein;
einer Mehrzahl von Hohlfasermembranen (212), wobei die Hohlfasermembranen (212) abgedichtet in dem Kopfelement (274, 284) befestigt sind und sich von der ersten Fläche des Kopfelements (274, 284) erstrecken und Enden (212b', 212b") aufweisen, die gegen den Behälter (222, 282) zum Auffangen von Permeat offen sind, derart, dass ein Teil des Substrates, der als Permeat in die Lumen der Membranen (212) gezogen wird, in den Behälter (222, 282) strömen kann; und
einer Gasverteilungseinrichtung (240, 241, 243, 245; 204, 286), die angepasst ist, um mit einer Gasquelle verbunden zu sein, und angepasst ist, um Gasblasen von nahe der ersten Fläche des Kopfelements (274, 284) aus einer oder mehreren Öffnungen (204, 243) abzugeben, die innerhalb der Mehrzahl von Membranen (212) angeordnet sind,
**dadurch gekennzeichnet, dass**
die Gasverteilungseinrichtung eine Gaszufuhrröhre (245, 286) umfasst, die allgemein vertikal ausgerichtet ist, wenn die Vorrichtung in Gebrauch ist, wobei die Gaszufuhrröhre (245, 286) von der ersten Fläche des Kopfelementes (274, 284) von einem Ort innerhalb der Mehrzahl von Membranen (212) derart nach oben vorsteht, dass die Membranen (212) die allgemein vertikale Gaszufuhrröhre (245, 286) umgeben, wo sich die Membranen (212) von dem Kopfelement (274, 284) erstrecken, wobei die Gaszufuhrröhre (245, 286) angeordnet ist, um Gas von der Gasquelle entlang und innerhalb der allgemein vertikalen Gaszufuhrröhre zuzuführen, damit das Gas als Blasen über die Öffnung (en) (204, 243) abgegeben wird.

2. Die Vorrichtung gemäß Anspruch 1, bei der die Gaszufuhrröhre (245, 286) axial innerhalb einer Mehrzahl von Membranen (212) angeordnet ist, die die Gaszufuhrröhre (245, 286) umgeben, und die Gasverteilungseinrichtung angeordnet ist, um Blasen nur von einem Ort innerhalb der Mehrzahl von Membranen abzugeben.

3. Die Vorrichtung gemäß einem der vorhergehenden Ansprüche, bei der die Membranen (212) allgemein parallel zueinander verlaufen und die Gaszufuhrröhre (245, 286) allgemein parallel zu den Membranen (212) verläuft.

4. Die Vorrichtung gemäß Anspruch 1, 2 oder 3, bei der Blasen, wenn sie aus den Öffnungen (204, 243) abgegeben werden, vertikal zwischen den Membranen (212) und parallel zu denselben nach oben strömen.

5. Die Vorrichtung gemäß einem der vorhergehenden Ansprüche, bei der die Öffnungen (204) an verschiedenen Orten um den Umfang der Gaszufuhrröhre (286) positioniert sind.

6. Die Vorrichtung gemäß einem der vorhergehenden Ansprüche, bei der die Gaszufuhrröhre (286) Öffnungen (204) zum Abgeben von Blasen an einer Mehrzahl von Orten entlang der Länge der Gaszufuhrröhre (286) aufweist.

7. Die Vorrichtung gemäß einem der vorhergehenden Ansprüche, bei der die Öffnungen (243) in Rohren (241) angeordnet sind, die sich von der Gaszufuhrröhre (245) nach außen erstrecken, wobei die sich nach außen erstreckenden Rohre einen Sprinkler (240) bilden.

8. Die Vorrichtung gemäß einem der vorhergehenden Ansprüche,- bei der die erste Fläche des Kopfelements (274, 284) kreisförmig ist und die Gaszufuhrröhre (245, 286) von der Mitte der ersten Fläche des Kopfelements (274, 284) vorsteht.

9. Die Vorrichtung gemäß einem der vorhergehenden Ansprüche, bei der die Gaszufuhrröhre (245, 286) in dem Kopfelement (274, 284) befestigt ist und sich zumindest teilweise durch dasselbe erstreckt.

10. Die Vorrichtung gemäß Anspruch 9, bei der sich die Gaszufuhrröhre (286) vollständig durch das Kopfelement (284) hindurch erstreckt.

11. Die Vorrichtung gemäß einem der vorhergehenden Ansprüche, bei der die Membranen (212) und die Gaszufuhrröhre (245, 286) senkrecht zu der ersten Fläche vorstehen.

12. Die Vorrichtung gemäß einem der vorhergehenden Ansprüche, bei der die Gaszufuhrröhre (286) ein Anschlussstück (201) aufweist, um die Röhre (286) mit einem Gasvorrat zu verbinden.

13. Die Vorrichtung gemäß einem der vorhergehenden Ansprüche, bei der die Membranen (212) aus geflochtenem Garn, das mit einem wasserunlöslichen Polymermaterial bedeckt ist, hergestellt sind.

14. Die Vorrichtung gemäß einem der vorhergehenden Ansprüche, bei der die Membranen (212) konfiguriert sind, um zu schwingen, wenn sie durch Blasen, die zwischen denselben aufsteigen, berührt werden.

15. Die Vorrichtung gemäß einem der vorhergehenden Ansprüche, bei der die Membranen nicht von einem Gehäuse eines Moduls umgeben sind.

16. Die Vorrichtung gemäß einem der vorhergehenden Ansprüche, bei der das Kopfelement (274, 284) eine dämpfende Schicht aufweist, die die Membranen (212) umgibt, wo sich die Membranen (212) von dem Kopfelement (274, 284) erstrecken.

17. Die Vorrichtung gemäß einem der vorhergehenden Ansprüche, bei der sich die Membranen (212) zwischen oberen und unteren Kopfelementen erstrecken und die Länge der Membranen (212) nicht mehr als 5 % mehr als die Entfernung zwischen Punkten beträgt, an denen die Membranen von den oberen und unteren Kopfelementen vorstehen.

18. Die Vorrichtung gemäß Anspruch 17, bei der die Länge der Membranen (212) zwischen 0,1 % und 5 % mehr als die Entfernung zwischen Punkten beträgt, an denen die Membranen (212) von den oberen und unteren Kopfelementen vorstehen.

19. Die Vorrichtung gemäß Anspruch 17, bei der die Länge der Membranen (212) zwischen 0,1 % und 1 % mehr als die Entfernung zwischen Punkten beträgt, an denen die Membranen (212) von den oberen und unteren Kopfelementen vorstehen.

20. Ein System zum Entnehmen von gefiltertem Permeat aus einem Substrat bei Umgebungsdruck, mit folgenden Merkmalen:
einem Reservoir (90), das ein Substrat bei Umgebungsdruck enthält;
einer Vorrichtung gemäß einem der vorhergehenden Ansprüche, die in das Substrat eingetaucht ist, derart, dass die erste Fläche des Kopfelements (274, 284) allgemein horizontal ist und sich die Gaszufuhrröhre (245, 286) allgemein vertikal von der ersten Fläche des Kopfelements (274, 284) nach oben erstreckt;
einer Saugquelle, die in Fluidkommunikation mit dem Permeatauslass (227, 285) steht und zum Anlegen eines ausreichenden Saugzugs zum Entnehmen von Permeat aus den Lumen der Membranen (212) betreibbar ist; und
einem Belüftungssystem zum Zuführen eines unter Druck stehenden Gases zu der Gasverteilungseinrichtung, wodurch im Betrieb von den Öffnungen (204, 243) abgegebene Blasen vertikal zwischen den Membranen (212) und parallel zu denselben nach oben strömen.

21. Das System gemäß Anspruch 20, das ein Rückspülsystem zum Rückspülen der Vorrichtung mit einer Flüssigkeit aufweist.

22. Das System gemäß Anspruch 21, bei dem die Flüssigkeit Permeat aufweist.

23. Das System gemäß einem der Ansprüche 20 bis 22, bei dem das Reservoir (90) ein sich langsam bewegendes oder kaptives Substrat enthält.

24. Das System gemäß einem der Ansprüche 20 bis 22, das ein Anschlussstück (201), das über dem Substrat positioniert ist, zum Verbinden der Gasverteilungseinrichtung mit einer Quelle von unter Druck stehendem Gas aufweist.

25. Die Verwendung einer Vorrichtung gemäß einem der Ansprüche 1 bis 19, um Permeat aus einem Substrat bei Umgebungsdruck zu filtern.

26. Die Verwendung gemäß Anspruch 25, bei der die Membranen (212) sich entlang ihrer gesamten Länge allgemein vertikal erstrecken und Blasen, die von den Öffnungen (204, 243) abgegeben werden, die allgemein vertikalen Membranen (212) schrubben.

27. Die Verwendung gemäß Anspruch 25 oder 26, bei der die Membranen (212) schwingen, wenn sie durch Blasen, die zwischen denselben aufsteigen, berührt werden.

28. Ein Prozeß zum Entnehmen von gefiltertem Permeat aus einem Substrat, mit folgenden Schritten:
Bereitstellen eines Reservoirs (90), das ein Substrat bei Umgebungsdruck enthält;
Bereitstellen einer Vorrichtung gemäß einem der Ansprüche 1 bis 19;
Platzieren der Vorrichtung in dem Substrat, derart, dass die erste Fläche des Kopfelements (274, 284) allgemein horizontal verläuft und sich die Gaszufuhrröhre (285, 286) allgemein vertikal von der ersten Fläche des Kopfelements (274, 284) nach oben erstreckt;
Anlegen eines Saugzugs an den Permeatauslass (227, 285), um Permeat aus den Lumen der Membranen (212) zu entnehmen; und
Liefern eines unter Druck stehenden Gases an eine Gasverteilungseinrichtung, wodurch von den Öffnungen (204, 243) abgegebene Blasen vertikal zwischen den Membranen (212) und parallel zu denselben nach oben strömen.

29. Der Prozeß gemäß Anspruch 28, bei dem die Membranen (212) schwingen, wenn sie durch Blasen, die zwischen denselben aufsteigen, berührt werden.

## Revendications

1. Dispositif pour retirer un perméat filtré à partir d'un substrat à pression ambiante, comportant :
un collecteur (274, 284) ayant une première face d'extrémité et une seconde face d'extrémité,
un réceptacle (222, 282) pour recueillir un perméat, le réceptacle (222, 282) étant en communication de fluide avec la seconde face du collecteur (274, 284), et ayant une sortie de perméat (227, 287) adaptée pour être connectée à une source d'aspiration,
une multiplicité de membranes en fibre creuse (212), les membranes en fibre creuse (212) étant fixées de manière étanche dans le collecteur (274, 284), et s'étendant à partir de la première face du collecteur (274, 284), et ayant des extrémités (212b', 212b") ouvertes vers le réceptacle (222, 282) pour recueillir un perméat, de telle sorte qu'une partie du substrat attirée dans les lumens des membranes (212) sous la forme d'un perméat peut s'écouler dans le réceptacle (222, 282), et
des moyens de répartition de gaz (240, 241, 243, 245 ; 204, 286) adaptés pour être connectés à une source de gaz, et adaptés pour évacuer des bulles du gaz provenant de la proximité de la première face du collecteur (274, 284) à partir d'une ou plusieurs ouvertures (204, 243) positionnées dans la multiplicité de membranes (212),
**caractérisé en ce que**
les moyens de répartition de gaz comportent un tube d'acheminement de gaz (245, 286) qui est orienté généralement verticalement lorsque le dispositif est utilisé, ledit tube d'acheminement de gaz (245, 286) faisant saillie vers le haut à partir de la première face du collecteur (274, 284) à partir d'un emplacement situé dans la multiplicité de membranes (212), de telle sorte que les membranes (212) entourent le tube d'acheminement de gaz généralement vertical (245, 286) là où les membranes (212) s'étendent à partir du collecteur (274, 284), ledit tube d'acheminement de gaz (245, 286) étant agencé pour acheminer du gaz à partir de la source de gaz le long du tube d'acheminement de gaz généralement vertical, et à l'intérieur de celui-ci, pour que le gaz soit évacué sous la forme de bulles via la ou lesdites ouvertures (204, 243).

2. Dispositif selon la revendication 1, dans lequel le tube d'acheminement de gaz (245, 286) est positionné axialement dans une multiplicité de membranes (212) qui entourent le tube d'acheminement de gaz (245, 286), et les moyens de répartition de gaz sont agencés pour évacuer des bulles uniquement à partir d'un emplacement situé à l'intérieur de la multiplicité de membranes.

3. Dispositif selon l'une quelconque des revendications précédentes, dans lequel les membranes (212) sont généralement parallèles les unes aux autres, et le tube d'acheminement de gaz (245, 286) est généralement parallèle aux membranes (212).

4. Dispositif selon la revendication 1, 2 ou 3, dans lequel les bulles, lorsqu'elles sont évacuées à partir des ouvertures (204, 243), s'écoulent verticalement vers le haut entre les membranes (212), et parallèlement à celles-ci.

5. Dispositif selon l'une quelconque des revendications précédentes, dans lequel les ouvertures (204) sont positionnées à différents emplacements autour de la circonférence du tube d'acheminement de gaz (286).

6. Dispositif selon l'une quelconque des revendications précédentes, dans lequel le tube d'acheminement de gaz (286) a des ouvertures (204) pour évacuer des bulles au niveau d'une pluralité d'emplacements le long de la longueur du tube d'acheminement de gaz (286).

7. Dispositif selon l'une quelconque des revendications précédentes, dans lequel les ouvertures (243) sont positionnées dans des tuyaux (241) s'étendant vers l'extérieur à partir du tube d'acheminement de gaz (245), lesdits tuyaux s'étendant vers l'extérieur formant un dispositif d'arrosage (240).

8. Dispositif selon l'une quelconque des revendications précédentes, dans lequel la première face du collecteur (274, 284) est circulaire, et le tube d'acheminement de gaz (245, 286) fait saillie à partir du centre de la première face du collecteur (274, 284).

9. Dispositif selon l'une quelconque des revendications précédentes, dans lequel le tube d'acheminement de gaz (245, 286) est fixé dans le collecteur (274, 284), et s'étend au moins partiellement à travers celui-ci.

10. Dispositif selon la revendication 9, dans lequel le tube d'acheminement de gaz (286) s'étend entièrement à travers le collecteur (284).

11. Dispositif selon l'une quelconque des revendications précédentes, dans lequel les membranes (212) et le tube d'acheminement de gaz (245, 286) font saillie perpendiculairement à la première face.

12. Dispositif selon l'une quelconque des revendications précédentes, dans lequel le tube d'acheminement de gaz (286) a un raccord (201) pour connexion du tube (286) à une alimentation de gaz.

13. Dispositif selon l'une quelconque des revendications précédentes, dans lequel les membranes (212) sont constituées d'un fil tressé recouvert d'un matériau polymérique insoluble dans l'eau.

14. Dispositif selon l'une quelconque des revendications précédentes, dans lequel les membranes (212) sont configurées pour osciller lorsqu'elles entrent en contact avec des bulles montant entre celles-ci.

15. Dispositif selon l'une quelconque des revendications précédentes, dans lequel les membranes ne sont pas confinées dans une enveloppe d'un module.

16. Dispositif selon l'une quelconque des revendications précédentes, dans lequel le collecteur (274, 284) a une lamelle d'amortissement entourant les membranes (212) là où les membranes (212) s'étendent à partir du collecteur (274, 284).

17. Dispositif selon l'une quelconque des revendications précédentes, dans lequel les membranes (212) s'étendent entre les collecteurs supérieur et inférieur, et la longueur des membranes (212) n'est pas supérieure de plus de 5 % à la distance entre des points où les membranes font saillie à partir des collecteurs supérieur et inférieur.

18. Dispositif selon la revendication 17, dans lequel la longueur des membranes (212) est entre 0,1 et 5 % supérieure à la distance entre des points où les membranes (212) font saillie à partir des collecteurs supérieur et inférieur.

19. Dispositif selon la revendication 17, dans lequel la longueur des membranes (212) dépasse entre 0,1 % et 1 % la distance entre des points où les membranes (212) font saillie à partir des collecteurs supérieur et inférieur.

20. Système pour retirer un perméat filtré à partir d'un substrat à pression ambiante, comportant :
un réservoir (90) contenant un substrat à pression ambiante,
un dispositif selon l'une quelconque des revendications précédentes immergé dans le substrat, de telle sorte que la première face du collecteur (274, 284) est généralement horizontale, et le tube d'acheminement de gaz (245, 286) fait saillie généralement verticalement vers le haut à partir de la première face du collecteur (274, 284),
une source d'aspiration en communication de fluide avec la sortie de perméat (227, 285), et pouvant fonctionner pour appliquer une aspiration suffisante pour retirer un perméat à partir des lumens des membranes (212), et
un système d'aération pour alimenter un gaz sous pression vers les moyens de répartition de gaz, de sorte qu'en utilisation, des bulles évacuées à partir des ouvertures (204, 243) s'écoulent verticalement vers le haut entre les membranes (12), et parallèlement à celles-ci.

21. Système selon la revendication 20, ayant un système de lavage à contre-courant pour laver le dispositif à contre-courant à l'aide d'un liquide.

22. Système selon la revendication 21, dans lequel le liquide comporte un perméat.

23. Système selon l'une quelconque des revendications 20 à 22, dans lequel le réservoir (90) contient un substrat se déplaçant lentement ou captif.

24. Système selon l'une quelconque des revendications 20 à 22, ayant un raccord (201) positionné au-dessus du substrat pour connecter les moyens de répartition de gaz à une source de gaz sous pression.

25. Utilisation d'un dispositif selon l'une quelconque des revendications 1 à 19, pour filtrer un perméat provenant d'un substrat à pression ambiante.

26. Utilisation selon la revendication 25, dans laquelle les membranes (212) s'étendent sur toute leur longueur généralement verticalement, et des bulles évacuées à partir desdites ouvertures (204, 243) frottent les membranes généralement verticales (212).

27. Utilisation selon la revendication 25 ou 26, dans laquelle les membranes (212) oscillent lorsqu'elles entrent en contact avec des bulles montant entre celles-ci.

28. Procédé pour retirer un perméat filtré à partir d'un substrat, comportant les étapes consistant à :
fournir un réservoir (90) contenant un substrat à pression ambiante,
fournir un dispositif selon l'une quelconque des revendications 1 à 19,
placer le dispositif dans le substrat de telle sorte que la première face du collecteur (274, 284) est généralement horizontale, et le tube d'acheminement de gaz (285, 286) fait saillie généralement verticalement vers le haut à partir de la première face du collecteur (274, 284),
appliquer une aspiration à la sortie de perméat (227, 285) pour retirer un perméat à partir des lumens des membranes (212), et
alimenter un gaz sous pression vers les moyens de répartition de gaz, de sorte que des bulles évacuées à partir des ouvertures (204, 243) s'écoulent verticalement vers le haut entre les membranes (212) et parallèlement à celles-ci.

29. Procédé selon la revendication 28, dans lequel les membranes (212) oscillent lorsqu'elles entrent en contact avec des bulles montant entre celles-ci.
